Europäisches Patentamt

European Patent Office

Office européen des brevets

(19)

(11) **EP 1 324 558 B1**

(12) **EUROPEAN PATENT SPECIFICATION**

(45) Date of publication and mention
of the grant of the patent:
**04.05.2005 Bulletin 2005/18**

(51) Int Cl.7: **H04L 27/34**, H04L 27/04

(21) Application number: **01130988.7**

(22) Date of filing: **28.12.2001**

(54) **Multiresolution broadcast transmitter and method using Gaussian trellis shaping to reduce average signal power and corresponding multi-stage decoder**

Rundfunksender und Sendemethode für digitale Signale mit Mehrfachauflösung unter Anwendung einer gaussverteilten Trellisformung zur Reduktion der Sendeleistung sowie entsprechender, mehrstufiger Dekoder

Emetteur et méthode de radiodiffusion numérique multirésolution avec mise en forme de trellis gaussienne pour réduire la puissance du signal émis et décoder à plusieurs étages correspondant

(84) Designated Contracting States:
**DE FR GB**

(43) Date of publication of application:
**02.07.2003 Bulletin 2003/27**

(73) Proprietor: **Sony International (Europe) GmbH**
**10785 Berlin (DE)**

(72) Inventor: **Schill, Dietmar,**
**c/o Adv. Techn. Center Stuttgart**
**70327 Stuttgart (DE)**

(74) Representative: **Müller - Hoffmann & Partner**
**Patentanwälte,**
**Innere Wiener Strasse 17**
**81667 München (DE)**

(56) References cited:
• **POLLEY M O ET AL: "Hybrid channel coding for multiresolution HDTV terrestrial broadcasting"** PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. 3 CONF. 1, 13 November 1994 (1994-11-13), pages 243-247, XP010145963 ISBN: 0-8186-6952-7

• **KANNAN RAMCHANDRAN: "MULTIRESOLUTION BROADCAST FOR DIGITAL HDTV USING JOINT SOURCE/ CHANNEL CODING" IEEE JOURNAL ON SELECTED AREAS IN COMMUNICATIONS, IEEE INC. NEW YORK, US, vol. 11, no. 1, 1993, pages 6-22, XP000377993 ISSN: 0733-8716**

• **PAPKE L ET AL: "Different iterative decoding algorithms for combined concatenated coding and multiresolution modulation" COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA, USA 1-5 MAY 1994, NEW YORK, NY, USA,IEEE, 1 May 1994 (1994-05-01), pages 1249-1254, XP010126691 ISBN: 0-7803-1825-0**

• **WACHSMANN U ET AL: "Multilevel codes: theoretical concepts and practical design rules" IEEE TRANSACTIONS ON INFORMATION THEORY, IEEE INC. NEW YORK, US, vol. 45, no. 5, July 1999 (1999-07), pages 1361-1391, XP002187530 ISSN: 0018-9448**

• **FORNEY JR G D: "TRELLIS SHAPING" IEEE TRANSACTIONS ON INFORMATION THEORY, IEEE INC. NEW YORK, US, vol. 38, no. 2 PT01, 1 March 1992 (1992-03-01), pages 281-300, XP000257683 ISSN: 0018-9448**

**Description**

The invention is related to a hierarchical modulation scheme, and particularly to a transmitter for signals modulated according to said hierarchical modulation scheme, to a multi-stage decoder, to a broadcast signal modulated according to said hierarchical modulation scheme, and to a method for generating said broadcast signal.

Whenever a single transmitter broadcasts digital data to several receivers located at different distances from the transmitter, the various receivers receive a broadcast signal of varying signal to noise ratio. The signal to noise ratio of the received signal becomes smaller and smaller with increasing distance between signal source and receiver. In practice such a scenario arises for the connection between the base station and the mobile phones of a wireless telephone system, for the transmission from a radio or TV station to the corresponding receivers, etc.

A receiver that is located nearby the signal source receives a signal having a large signal to noise ratio. In this case, the probability of channel impairments and bit errors is rather small. Therefore, only a small amount of coding redundancy has to be added to the data in order to protect the transmitted data.

Receivers that are located far away from the signal source receive a weak and distorted signal having a rather small signal to noise ratio. In this situation, a large amount of coding redundancy has to be added to the data, in order to be able to correct any bit errors caused by channel impairments. Here, a robust level signal having a small data rate and a lot of redundancy is needed.

Hence, for a receiver located in the proximity of the signal source, an enhancement level signal with a large transmission rate and a small amount of coding redundancy is required, while for receivers which receive a weak signal, a robust level signal is needed. The question is how these contradictory requirements can be fulfilled with a single digital transmission signal.

One solution is to alternatingly transmit the robust level signal and the enhancement level signal in a time sharing mode. For this purpose, the transmission signal comprises a first type of time slots for transmitting the robust level signal, and a second type of time slots for transmitting the enhancement level signal. Receivers which receive a weak signal with small signal to noise ratio decode the robust level signal transmitted within the first type of time slots, while receivers which receive a strong signal decode the enhancement level signal transmitted within the second type of time slots, which provides a much better signal quality than the robust level signal.

In the article "Broadcast channels" by T. Cover, IEEE Trans. Inf. Theory, IT-18, 2-14, 1972 the information theory of the broadcast channel is explored, and it is shown that the time-sharing approach is suboptimal. Nevertheless, the orthogonal split of the transmission ressources (time or frequency e.g.) is easy to design for and it is still predominant in today's systems in the field.

H. Imai and S. Hirakawa introduced the concept of multilevel codes which are utilized for hierarchical modulation and demodulation schemes. A receiver which receives such a hierarchically encoded signal may decode differing parts of the transmitted sequence at different received signal to noise ratios. In the article "A New Multilevel Coding Method Using Error Correcting Codes" by H. Imai and S. Hirakawa, IEEE Trans. Inf. Theory, IT-23, 371-377, 1977, more details of said multi-level coded modulation scheme can be found.

One of most powerful applicable hierarchical modulation scheme was presented in 1976/1977 by G. Ungerboeck. A description of Ungerboeck's approach can be found in the articles "On improving data-link performance by increasing channel alphabet and introducing sequence coding", G. Ungerboeck and I. Csajka, Proc. IEEE Int. Symp. Information Theory (ISIT), Ronneby, Sweden, June 1976, and in "Channel coding with multilevel/phase signals", IEEE Trans. Inform. Theory, vol. IT-28, pp. 55-67, January 1982. Ungerboeck's approach to coded modulation is based on mapping by set partitioning. Thereby, the set of signal points

$$A = \{a_0, a_1, \ldots, a_{M-1}\}$$

of an $M=2^l$-ary modulation scheme is successively binary partitioned in l steps defining a mapping of binary addresses

$$x = (x^0, x^1, \ldots, x^{l-1})$$

to signal points $a_m$, in a way that the Euclidian distance between the remaining signal points of a signal set is maximised at each partitioning step. In most work dealing with coded modulation, the set partitioning strategy introduced by Ungerboeck is chosen.

The maximum possible transmission capacity C in a point to point transmission has been calculated by Claude Shannon and is equal to

$$C = B \cdot \log_2\left(1 + \frac{P}{N}\right) \quad [\text{bit} / \text{s}],$$

whereby P is the power of the transmitted signal and N is the noise power within the available frequency bandwidth B. More details can be found in two articles by C. E. Shannon, "A mathematical theory of communication", The Bell System Technical Journal, 27: 379-423, July 1948, and "A mathematical theory of communications", The Bell System Technical Journal, 27: 623-656, October 1948.

In his article "Broadcast channels", IEEE Transactions on Information Theory, IT-18(1): 2-14, January 1972, T. M. Cover has generalized the capacity C to the capacity region of the degraded broadcast channel. The following equation gives the maximum achievable transmission capacity $C_i$ on quality level i of a hierarchical transmission scheme:

$$C_i = B \cdot \log_2\left(1 + \frac{\mu_i \cdot P}{N_i + P \cdot \sum_{j=i+1}^{L-1} \mu_j}\right)[\text{bit}/\text{s}]$$

with $N_i$ being the noise level on quality level i, and whereby the relation $N_0 > N_1 > ... > N_{L-1}$ holds for the L quality levels of the transmission system. Further $\mu_i$ is the fraction of the total transmit power P spent on quality level i, and therefore

$$\sum_{j=0}^{L-1} \mu_j = 1.$$

In the article "Hybrid channel coding for multiresolution HDTV terrestrial broadcasting", by Polley et al., Proceedings of the International Conference on Image Processing (ICIP), Nov. 13-16, 1994, IEEE Comp. Soc. Press, vol. 3 Conf. 1, 13.11.1994, pages 243-247, a new HDTV system is described that applies joint multiresolution (MR) source and channel coding. A multiresolution HDTV video signal is partitioned into three different quality levels, each represented by a corresponding number of mapping levels.

In the article "Multiresolution Broadcast for Digital HDTV Using Joint Source/Channel Coding" by Kannan Rarnchandran, IEEE Journal on Selected Areas in Communications, vol. 11, no. 1, 1993, pages 6-22, multiresolution (MR) joint source-channel coding in the context of digital terrestrial broadcasting of high definition television (HDTV) is discussed. It is shown how multiresolution trellis-coded modulation (TCM) can be used to increase coverage range.

In the article "Different Iterative Decoding Algorithms for Combined Concatenated Coding and Multiresolution Modulation" by Papke et al, Communications, 1994. ICC '94, SUPERCOMM/ICC '94, Conference Record, IEEE, 1.5.1994, pages 1249-1254, a three hierarchy level source coding scheme providing three image qualities HDTV, EDTV and SDTV is described, which is based on a concatenated coding scheme. The inner convolutional code is combined with 64-Multiresolution QAM. The outer code is a RS code.

So far, modulation schemes have been discussed whereby the signal points have equally distributed probabilities. Besides that, for standard non-hierarchical modulation schemes, it is well known to shape the probabilities of the signal points, in order to increase the performance of the transmission system. Shaping adds another degree of freedom to the system design by allowing the signal points to be of differing probabilities.

The article "Multilevel Codes: Theoretical Concepts and Practical Design Rules" by Udo Wachsmann, Robert F.H. Fischer, and Johannes B. Huber, IEEE Transactions on Information Theory. IEEE. vol. 45, no. 5, July 1999, pages 1361-1391, is related to $2^l$-ary transmission using multilevel coding (MLC) and multistage decoding (MSD). Furthermore, the application of signal shaping is discussed. A uniform signal distribution is replaced by a Gaussian-like distribution in order to reduce average transmit power.

The article "Trellis Shaping" by G.D. Forney Jr., IEEE Transactions on Information Theory. IEEE, vol. 38, no. 2 PTO1, 1.3.1992, pages 281-300, relates to Trellis shaping. which is a method of selecting a minimum-weight sequence from an equivalence class of possible transmitted sequences by a search through the trellis diagram of a shaping convolutional code. A shaping decoder is described, which performs an inverse mapping of the received mapping level bitstreams.

It is an object of the invention to provide a transmission system in which the coding efficiency of a hierarchical modulation scheme is further improved, and which allows to approach the theoretical performance limits of the degraded broadcast channel more closely.

The object of the invention is solved by a transmitter for signals modulated according to a hierarchical modulation scheme according to claim 1, by a multi-stage decoder according to claim 14, by a broadcast signal according to claim 25, and by a method for generating a broadcast signal according to claim 33.

According to the invention, the transmitter is a transmitter for signals modulated according to a hierarchical modulation scheme, whereby source signal bitstreams of L different quality levels are partitioned into bitstreams for l mapping levels. Each quality level i is represented by $l_i$ corresponding mapping labels, whereby by setting the $l_i$ mapping labels corresponding to said quality level i, one of $2^{l_i}$ hyper constellation points of said quality level i is selected. Thereby each hyper constellation point represents a subcluster of the set of signal points. The transmitter comprises means for shaping, individually for each quality level i, the probability distribution within at least one of the quality levels. Said means for shaping assign unequally distributed probabilities to the $2^{l_i}$ hyper constellation points of a quality level i.

In a transmitter according to the invention, the concept of shaping has been applied for the first time to a hierarchical modulation scheme. The main idea of the invention is to apply shaping individually and separately for each quality level i of the hierarchical transmission scheme, whereby each quality level comprises $l_i$ corresponding mapping levels. A set of hyper constellation points $u_{i,k}$, with k=0, 1, ..., $2^{l_i}-1$, belongs to each quality level i of the hierarchical transmission scheme. For each quality level i, an individual probability distribution $p_{U_i}(u_{i,k})$, with k=0, 1, ..., $2^{l_i}-1$, is chosen. Shaping of the total set of signal points for the hierarchical modulation scheme is performed by separately shaping the probability distributions within each of the L quality levels.

For this reason, the transmitter does not comprise one big shaping unit for shaping the signal points' total probability distribution. Instead, the transmitter comprises a multitude of small shaping units for shaping the probability distributions within certain quality levels. Usually, trellis shapers are used as shaping units, and said trellis shapers utilize a trellis algorithm for adjusting the probability distribution in a way that an energetically optimized sequence of hyper constellation points is found. The complexity of the path optimization problem the trellis shaper has to solve depends strongly on the size of the set of signal points or hyper constellation points for which the path optimization problem is solved. The complexity of shaping a set of $2^{l_i}$ hyper constellation points of quality level i is much lower than the complexity of shaping the probability distribution for the whole set of signal points. Therefore, by shaping the probability distributions separately within each quality level i, it is possible to break down a complex problem into a set of small, solvable tasks.

With a transmitter according to the invention, it is possible to apply the concept of shaping to a hierarchical modulation scheme. By doing this, the average transmit power is reduced, and the performance of the hierarchical modulation scheme is improved. In fact, the invention allows to reach the theoretical Shannon-Cover bound more closely than it has been possible before.

According to a preferred embodiment of the invention, each hyper constellation point corresponds either to the coordinate of the center of the subcluster it represents, or to a signal point. On the highest quality level, each hyper constellation point of said quality level is identical to a signal point. For all the lower quality levels, each of the hyper constellation points of said quality levels is equal to the center coordinate of the subcluster it represents.

Preferably, the transmitter comprises means for multilevel coding, which comprise a set of encoders for separately encoding the bitstreams of said l mapping levels. Thus, the amount of redundancy added to each of said mapping level bitstreams can be individually chosen according to the quality level said mapping level corresponds to. For low-quality bitstreams, more coding redundancy has to be added than for high-quality bitstreams.

Preferably, for at least one quality level, the bitstream of the highest mapping level corresponding to said quality level is not encoded at all. If the hyper constellation points corresponding to the two possible values said highest mapping level bit can take are separated far enough, said highest mapping label can be decoded without any ambiguities. In this case, it is not necessary to add redundancy to said bitstream of the highest mapping level, and therefore, said bitstream doesn't have to be encoded. The number of encoders within the transmitter is reduced, and the transmitter becomes simpler and cheaper.

Preferably, said means for shaping comprise at least one shaping unit per quality level, which enforce, according to shaping information that is utilized by said shaping units during the shaping operation, an unequally distributed probability distribution of the $2^{l_i}$ hyper constellation points of said quality level. By enforcing an unequally distributed probability distribution within a certain quality level, it is possible to increase the number of low-amplitude signal points, and to decrease the number of high-amplitude signal points within the broadcast signal. The average signal power needed for transmitting a sequence of data bits is reduced, and the transmitter's performance is increased.

According to a preferred embodiment of the invention, said shaping units are realized as Trellis shaping units. Shaping can be realized by means of a Trellis algorithm. Within a Trellis shaping window, the bitstreams that are to be shaped are used, together with additional shaping information, as an input for a path optimization problem. As a result of the shaping operation, the path with the lowest transmit energy is found.

Preferably, the transmitter comprises shaping information encoding means for at least one of said quality levels for generating shaping information coding redundancy, which is transmitted together with said shaping information, in order to protect said shaping information. When said shaping information is transmitted to a receiver, transmission errors due to channel impairments might occur. In case faulty shaping information is utilized for generating the re-encoded data stream for higher decoding stages, the data decoded by said higher decoding stages will be faulty as well. In order to protect said shaping information, shaping information coding redundancy is transmitted together with said shaping information. The additional coding redundancy allows to correct any bit errors of the shaping information that occur during the transmission. By using the error-corrected shaping information when generating the re-encoded data streams, it is possible to avoid decoding errors on part of the higher decoding stages.

According to a preferred embodiment of the invention, the extent of shaping information coding redundancy for quality level i is chosen according to the signal to noise ratio of quality level i+1. On part of a receiver, the shaping information for quality level i does not have to be considered when the data stream for quality level i is decoded. For decoding the data streams of higher quality levels, such as the quality level i+1, the shaping information of quality level i has to be known, though. Only in case the receiver attempts to decode the data streams for quality level i+1, which implies that the channel's signal to noise ratio is good enough for decoding the data streams for quality level i+1, the shaping information for quality level i is used. In order to protect the data integrity of the shaping information of quality level i, it is therefore sufficient to choose the shaping information coding redundancy according to the signal to noise ration for quality level i+1.

Preferably, said shaping information coding redundancy is transmitted with a time delay relative to said shaping information, whereby said time delay is larger than the length of the shaping window used by the shaping units for enforcing the desired probability distribution. The shaping information coding redundancy cannot be generated before the path optimization process within the shaping window of the shaping unit has been finished. Therefore, there will always exist a time delay between the availability of the shaping information itself and the availability of the shaping information coding redundancy.

According to a preferred embodiment of the invention, said probability distribution within at least one quality level i is a discrete Gaussian distribution. A discrete Gaussian distribution, which can be described by the term

$$e^{-\lambda_i \cdot |u_{i,k}|^2},$$

with $\lambda_i > 0$, is an efficient way for implementing a probability distribution which smoothly declines with increasing $|u_{i,k}|$. The decline is defined by only one parameter, $\lambda_i$. For each quality level i, $\lambda_i$ can be chosen individually.

Preferably, said set of signal points is a non-uniformly spaced set of signal points. By adjusting the spacing between the signal points of the signal alphabet, an additional degree of freedom for the design of the hierarchical coding scheme is provided. This allows to optimize said hierarchical coding scheme.

Further preferably, said modulation scheme is an Amplitude Shift Keying (ASK) or a Quadrature Amplitude Modulation (QAM) scheme, and particularly a 8-ASK, 16-ASK, 64-QAM or 256-QAM scheme. Within an Amplitude Shift Keying modulation scheme, different amplitudes have been assigned to the signal points of the signal alphabet. The one-dimensional ASK constellations can be directly generalized to the two-dimensional QAM constellations.

The invention also relates to a multi-stage decoder for decoding a signal modulated according to a hierarchical modulation scheme, whereby said signal is composed of source signal bitstreams of L different quality levels, which have been partitioned into bitstreams for I mapping levels. Each quality level i is represented by $l_i$ corresponding mapping levels. According to the invention, the multi-stage decoder comprises decoding means, for each quality level i, which decode the $l_i$ corresponding mapping level bitstreams, and which provide the decoding means of higher quality levels with reliability information on the decoded mapping level bitstreams. Furthermore, the multi-stage decoder comprises means for separating the shaping information for at least one quality level i from the received mapping level bitstreams for quality level i, and reliability information generation means, which produce reliability information on the shaping information for quality level i.

When the concept of shaping is applied within a non-hierarchical modulation scheme, the shaping information can be simply ignored on part of the receiver. As soon as shaping is applied within a hierarchical modulation scheme, a decoding stage of a higher quality level has to be provided with reliability information (soft information) on both the shaping information and the data, because for decoding the higher quality levels, the hyper constellation points of the lower quality levels have to be known.

In the multi-stage decoder as proposed by this invention, a decoder of a higher quality level is informed about the reliability of the decoded mapping level bitstreams, and about the reliability of the shaping information for the lower quality level. The reliability information on the decoded mapping level bitstreams is generated by the decoders of said mapping level bitstreams when said bitstreams are decoded. In order to generate the reliability information on the shaping information for quality level i, the multi-stage decoder comprises reliability information generation means.

By means of said reliability information, it is possible to forward signal constellation information for a lower quality level to higher quality levels. Thus, the concept of shaping can be applied to a hierarchical modulation scheme.

Preferably, said reliability information on the shaping information for quality level i is hard-quantised reliability information, which is preferably obtained by re-encoding said error-corrected shaping information for quality level i.

Further preferably, said reliability information on said mapping level bitstreams is hard-quantised reliability information, which is preferably obtained by re-encoding said decoded mapping level bitstreams.

According to a preferred embodiment of the invention, the multi-stage decoder comprises means for storing a block of received data, which store a block of received data until the shaping information coding redundancy for said block of received data, which is transmitted with a delay relative to said shaping information itself, has been received. By storing the received shaping information, decoding of said shaping information can be postponed until said shaping information coding redundancy is available.

Preferably, the multi-stage decoder comprises shifting means, which shift, each time a mapping label has been decoded, the hyper constellation points of a corresponding respective subcluster by an offset value, such that the hyper constellation points of said subcluster are centred at zero. Especially if the set of hyper constellation points contained within a subcluster is identical for all the subclusters of a certain quality level, no matter which subcluster of said quality level is selected, one will always obtain the same set of hyper constellation points, provided that said set is shifted in a way that it is centred at zero. Thus, the L quality levels of the modulation scheme become independent of each other.

Further features and advantages of a preferred embodiment according to the present invention will be explained below in conjunction with the accompanying drawings, in which

Fig. 1 shows how the reception conditions around a transmitter depend on the receiver's distance from said transmitter;

Fig. 2 shows how the bitstreams of L source signals are partitioned and encoded in order to obtain bitstreams for l different mapping levels;

Fig. 3A depicts a set of signal points for an amplitude modulation scheme, whereby the hyper constellation points of the robust layer are indicated as subclusters;

Fig. 3B depicts the hyper constellation points of the enhancement layer for the amplitude modulation scheme shown in Fig. 3A;

Fig. 4 shows the dependence of the mean square of the constellation points' amplitudes, $\sigma_M^2$, and of the entropy, $H(M)$, on the parameter $\lambda$ of a discrete Gaussian probability distribution M;

Fig. 5 shows the setup of a hierarchical shaping encoder for quality level i;

Fig. 6 shows the scheduling of the transmission of data bits, shaping information and shaping information coding redundancy;

Fig. 7 shows the setup of a simplified hierarchical shaping encoder for quality level i, whereby the shaping information is not encoded by said encoder;

Fig. 8 shows the setup of a simplified hierarchical shaping encoder for quality level i, whereby both the shaping information and the bitstream of the highest mapping level of quality level i are not encoded;

Fig. 9 depicts a hierarchical decoder for quality level i, whereby both for the shaping information and the data, reliability information is generated and forwarded to higher decoding stages;

Fig. 10 shows how a sequence of received data blocks is decoded by a multi-stage decoder;

Fig. 11 shows the performance gain that can be achieved by using the invention for a first example;

Fig. 12 shows the performance gain that can be achieved by using the invention for second example.

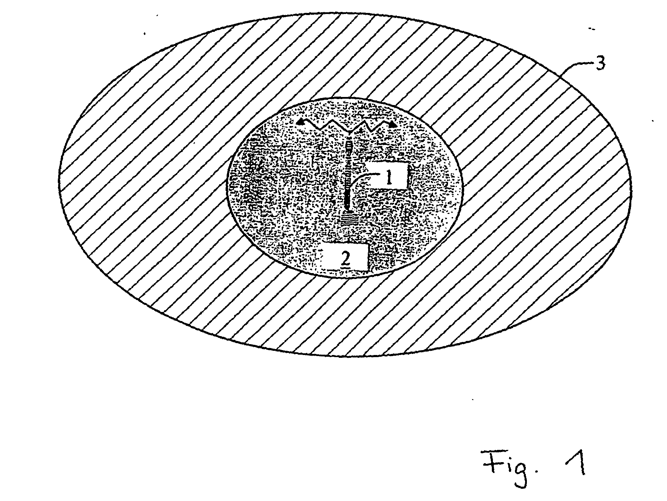

In Fig. 1, a transmitter 1 emits a broadcast signal, which is received by a multitude of receivers located at various distances from said transmitter 1. The transmitter 1 may e. g. be a base station for a wireless telephone system, or a radio or TV station.

Receivers located within the coverage area 2 receive a powerful signal. For these receivers, the signal to noise ratio of the received signal is rather large. For receivers located within the coverage area 2, a slightly encoded high-quality signal, a so-called enhancement level signal, would be best for efficiently transmitting data via the broadcast channel.

Receivers located within the coverage area 3 receive a rather weak signal. The signal to noise ratio of the signal received within the coverage area 3 is low. Therefore, for receivers located within the coverage area 3, a robust signal with a large amount of coding redundancy is required.

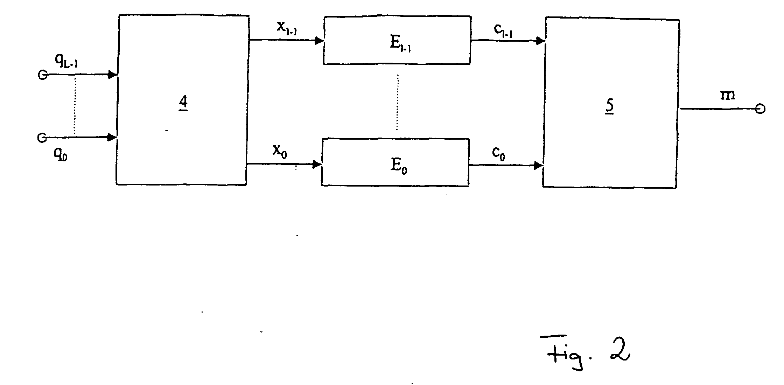

Both the requirements of receivers located in the coverage area 2 and of receivers located within the coverage area 3 can be fulfilled by means of a hierarchical coding scheme. An encoder for such a hierarchical coding scheme is shown in Fig. 2. The encoder transforms bitstreams $q_0, q_1, ..., q_{L-1}$ of L different quality levels into a broadcast signal, whereby $q_0$ denotes the bitstream of the lowest quality level, and whereby $q_{L-1}$ denotes the bitstream of the highest quality level. The bitstreams $q_0, q_1, ...q_{L-1}$ may e. g. be generated by L different signal sources.

The bitstreams $q_0, q_1, ...q_{L-1}$ are forwarded to the partitioning means 4, which generate l bitstreams $x_0, x_1, ... x_{l-1}$ of l different mapping levels by mapping each bitstream $q_i$ of quality level i to $l_i$ corresponding mapping levels, with $l_i \geq 1$. The total number l of mapping levels is obtained by adding the numbers $l_i$ of the various quality levels (i = 0, 1, ..., L-1):

$$l = \sum_{i=0}^{L-1} l_i$$

Next, multilevel coding of the mapping level bitstreams is performed. Each of the l mapping level bitstreams $x_0, x_1, ... x_{l-1}$ is individually encoded by a corresponding encoder $E_0, E_1, ... E_{l-1}$, in order to generate the encoded bitstreams $c_0, c_1, ..., c_{l-1}$. The lower the quality of the respective mapping level bitstream is, the more coding redundancy will have to be added by the corresponding encoder. Therefore, the encoder $E_0$ adds a lot of coding redundancy to the bitstream $x_0$, while the amount of coding redundancy added to the bitstream $x_{l-1}$ by the encoder $E_{l-1}$ is rather small.

The resulting bitstreams $c_0, c_1, ..., c_{l-1}$ are forwarded to the mapping unit 5. It is important that the bitstreams $c_0, c_1, ..., c_{l-1}$ have equal data rates. This implies that the data rates of the bitstreams $x_0, x_1, ..., x_{l-1}$ are not equal to each other, because of the varying amounts of coding redundancy added by the encoders $E_0, E_1, ..., E_{l-1}$. In fact, the data rate of the bitstream $x_0$, which belongs to the lowest quality level, is typically much smaller than the data rate of the high-quality bitstream $x_{l-1}$. The bits of each mapping level bitstream represent so-called mapping labels. With each clock cycle, the mapping unit 5 maps the l incoming bits of the l mapping level bitstreams to the signal points of the modulation scheme. The l synchronously arriving mapping labels of the l mapping level bitstreams are bijectively mapped to the signal points of the set of signal points.

For the following example, the number of quality levels L is chosen to be two. Therefore, there is a source signal datastream $q_0$ for the robust layer, and a source signal datastream $q_1$ for the enhancement layer. These two source signal bitstreams $q_0$ and $q_1$ are partitioned into l=3 mapping level bitstreams $x_0, x_1$ and $x_2$. Two mapping level bitstreams, the bitstreams $x_0$ and $x_1$, correspond to quality level 0 (robust layer), and $l_0$ is equal to two. One mapping level bitstream, the bitstream $x_2$, corresponds to quality level 1 (enhancement layer), and $l_1$ is equal to one. The total number of mapping levels, l, is equal to the sum of $l_0$ and $l_1$:

$$l = \sum_{i=0}^{L-1} l_i = l_0 + l_1 = 2 + 1 = 3$$

The encoders $E_0, E_1$ and $E_2$ add redundancy to the bitstreams $x_0, x_1, x_2$, preferably by applying a convolutional algorithm to these bitstreams. By individually encoding the bitstreams $x_0, x_1, x_2$, the bitstreams $c_0, c_1, c_2$ are generated, whereby the bitstreams $c_0$ and $c_1$ represent the robust level, and whereby the bitstream $c_2$ represents the enhancement level. Per cycle, each of the bitstreams $c_0, c_1, c_2$ contributes one bit. Per cycle of the data rate of the bitstreams $c_0, c_1$ and $c_2$, l=3 bits have to be mapped to a set of $2^l = 2^3 = 8$ signal points.

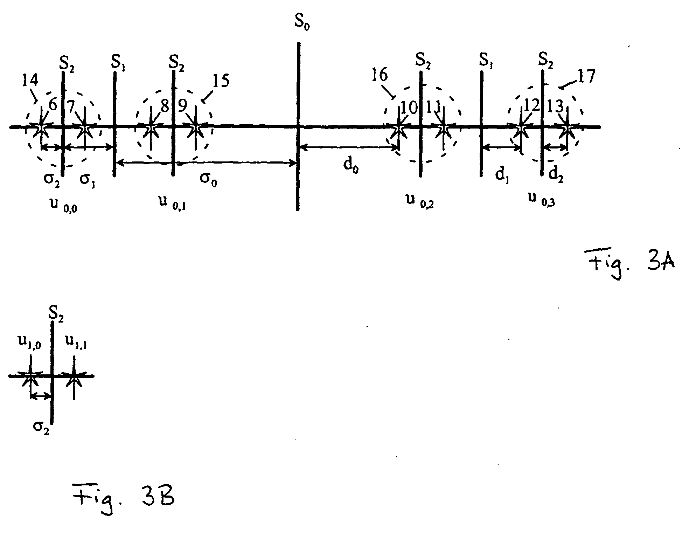

In Fig. 3A, a discrete and finite set of $2^3 = 8$ signal points for an amplitude modulation scheme such as 8-ASK (8-Amplitude Shift Keying) is shown. In order to provide additional degrees of freedom for the system design, the eight signal points 6, 7, 8, 9, 10, 11, 12, 13 are non-uniformly spaced.

When mapping the three mapping labels $c_0$, $c_1$ and $c_2$ to the set of signal points 6, 7, 8, 9, 10, 11, 12, 13, the mapping labels $c_0$ and $c_1$, which correspond to the robust quality level 0, will be considered first. The values of the mapping labels $c_0$ and $c_1$ determine in which one of the four subclusters 14, 15, 16, 17 the next signal point that is to be transmitted will be found. The subcluster 14, which comprises the signal points 6 and 7, is selected by the values $c_0=0$ and $c_1=0$. The signal points 8 and 9 form the subcluster 15, which is selected by $c_0=1$ and $c_1=0$. Subcluster 16 comprises the signal points 10 and 11 and corresponds to $c_0=0$ and $c_1=1$, and subcluster 17, which is selected by $c_0=1$ and $c_1=1$, comprises the signal points 12 and 13.

The value of the first mapping label, $c_0$, selects two out of four subclusters. If $c_0$ is equal to 0, the subclusters 14 and 16 are selected. Accordingly, if $c_0$ is equal to 1, the subclusters 15 and 17 are chosen.

By means of the second mapping label, $c_1$, one out of the two selected subclusters is determined. If $c_0$ has been equal to 0, the value of $c_1$ determines whether subcluster 14 or subcluster 16 comprises the actual signal point. If $c_1$ is equal to 0, subcluster 14 will be selected, and if $c_1$ is equal to 1, subcluster 16 will be selected.

Accordingly, if $c_0$ has been equal to 1, the value of $c_1$ determines whether subcluster 15 or subcluster 17 comprises the actual signal point. If $c_1$ is equal to 0, subcluster 15 will be selected, and if $c_1$ is equal to 1, subcluster 17 will be selected.

By considering the mapping labels corresponding to the robust quality level 0, which are the mapping labels $c_0$ and $c_1$, one of the four subclusters 14, 15, 16, 17 is selected. The centers of these four subclusters form the set $A_0$ of hyper constellation points for the quality level 0:

$$A_0 = \{ u_{0,0}, u_{0,1}, u_{0,2}, u_{0,3} \}$$

The hyper constellation point $u_{0,0}$ is equal to the center coordinate of the subcluster 14, the hyper constellation point $u_{0,1}$ is equal to the center of subcluster 15, the hyper constellation point $u_{0,2}$ is equal to the center of subcluster 16, and the hyper constellation point $u_{0,3}$ is equal to the center of subcluster 17. By evaluating the mapping labels $c_0$, $c_1$ of the robust quality level 0, one of the four hyper constellation points of the set $A_0$ is selected.

In order to generalize the above-mentioned concept of hyper constellation points to any quality level i, with said quality level i comprising $l_i$ mapping levels, the set of hyper constellation points $A_i$ for said quality level i comprises $2^{l_i}$ hyper constellation points and can be represented as follows:

$$A_i = \{ u_{i,0}, u_{i,1}, \ldots, u_{i,2^{l_i}-1} \}$$

Let us assume that subcluster 15 has been selected by the mapping labels $c_0$ and $c_1$, which are the mapping levels of the quality level 0. This implies that $c_0$ has been equal to 1, and that $c_1$ has been equal to 0.

Subcluster 15 comprises two signal points, signal point 8 and signal point 9. The selection of one of these two signal points is made according to the value of the mapping label $c_2$, which is the (only) mapping label corresponding to quality level 1. Therefore, $l_1=1$, and the set $A_1$ of hyper constellation points of the quality level 1 comprises $2^{l_i}=2^1=2$ hyper constellation points $u_{1,0}$ and $u_{1,1}$:

$$A_1 = \{ u_{1,0}, u_{1,1} \} .$$

For this reason, each of the subclusters 14, 15, 16, 17 comprises exactly two signal points, with one of said subclusters being selected by the values of $c_0$ and $c_1$, and with one of the signal points within said subcluster being selected by the value of $c_2$. In Fig. 3B, the set $A_1$ of $2^{l_1}=2$ hyper constellation points $u_{1,0}$ and $u_{1,1}$ is depicted. This set $A_1$ is the same for all possible values of of $c_0$ and $c_1$.

Next, the concept of shaping will be introduced. Shaping means that unequally distributed probabilities are assigned to a set of signal points. Let us for example consider the set

$$A_0 = \{u_{0,0}, u_{0,1}, u_{0,2}, u_{0,3}\},$$

which comprises the four hyper constellation points $u_{0,0}$, $u_{0,1}$, $u_{0,2}$ and $u_{0,3}$. Without shaping, every hyper constellation point of said set $A_0$ would occur with the same probability $p_{U_0}(u_{0,k}) = 0,25$, with k = 0, 1, 2, 3. By shaping the probability distribution of the hyper constellation points $u_{0,0}$, $u_{0,1}$, $u_{0,2}$ and $u_{0,3}$, it is possible to enforce that some of these hyper constellation points, e. g. $u_{0,1}$ and $u_{0,2}$, occur more often than the other hyper constellation points (e. g. $u_{0,0}$ and $u_{0,3}$) of said set $A_0$. By doing this, it is possible to increase the amount of hyper constellation points with low signal amplitudes in the transmitted signal, and to reduce the amount of hyper constellation points with large signal amplitudes in the transmitted signal.

Shaping adds another degree of freedom to the system design by allowing the signal points to be of differing probability. The sum of the probabilities of the individual points of the constellation remains, of course, at 1. Because the average transmit power of a signal is reduced, shaping can significantly increase performance at little or no complexity for the receiver.

According to the invention, the concept of shaping is generalized to hierarchical modulation schemes. Theoretically any distribution of the probability mass function of the signal points can be applied and many will result in an increase in performance. According to the invention, the probability distribution is chosen individually and separately for each quality level i. Preferably, a discrete Gaussian distribution is chosen as the probability distribution on each quality level, as given by the following equation:

$$p_{U_i}(u_{i,k}) = W(\lambda_i) \cdot e^{-\lambda_i \cdot |u_{i,k}|^2}, \qquad \lambda_i \geq 0$$

Here, $u_{i,k}$ is the $k^{th}$ hyper constellation point of the quality level i and denotes either the center of a subcluster or a signal point. $W(\lambda_i)$ has to be chosen in order to normalize the probability mass function and therefore

$$W(\lambda_i) = \left(\sum_{u_{i,k} \in A_i} e^{-\lambda_i \cdot |u_{i,k}|^2}\right)^{-1},$$

whereby $A_i$ is defined as the set of all the hyper constellation points of quality level i,

$$A_i = \{u_{i,0}, u_{i,1}, \ldots, u_{i,2^{l_i}-1}\}.$$

By adjusting $\lambda_i$, the decline of the probability mass function $p_{U_i}(u_{i,k})$ can be defined. The $\lambda_i$ are additional free design parameters and are chosen in order to maximize the joint transmission rates on the L quality levels. The larger the chosen $\lambda_i$ is, the larger the deviations between the probabilities $p_{U_i}(u_{i,k})$ within the quality level i will be. This will affect $\sigma_{U_i}^2$, the mean square of the constellation points' amplitudes, which is defined as

$$\sigma_{U_i}^2 = \sum_{k=0}^{2^{l_i}-1} |u_{i,k}|^2 \cdot p_{U_i}(u_{i,k})$$

The larger the chosen $\lambda_i$ is, the smaller $\sigma_{U_i}^2$, the mean square of the constellation points' amplitudes, will be, and the smaller the average transmit power will get.

This is not the only aspect that has to be considered when choosing the best value for $\lambda_i$, though. $H(U_i)$ denotes the entropy of the set of signal points used for data transmission when the probabilities of said signal points are given by the probability distribution $U_i$. The entropy $H(U_i)$ reaches its maximum when all the signal points occur with equal probability. This corresponds to the case $\lambda_i=0$.

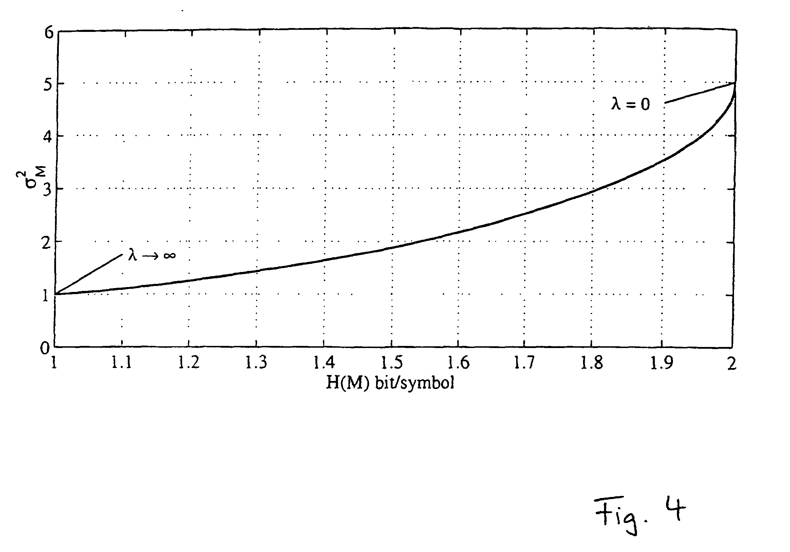

In Fig. 4, the dependence of both the mean square of the constellation points' amplitudes, $\sigma_M^2$, and of the entropy, H(M), on the parameter $\lambda$ of a discrete Gaussian probability distribution M are shown. The higher the entropy H(M) is, the more information can be transmitted with a given number of bits. The smaller $\lambda$ gets, the higher the entropy H(M) will be. Therefore, a large value of $\lambda$ is advantageous as far as the mean square $\sigma_M^2$ of the signal point amplitudes is concerned, but not desirable as far as the entropy H(M) is concerned. By means of a trade-off between H(M) and $\sigma_M^2$, the optimum value of $\lambda$ can be determined.

The probability of the signal points m in the full signal alphabet A is obtained as the product of the probabilities of the subclusters of the individual quality levels to which m belongs:

$$p_M(m) = \prod_{i=0}^{L-1} p_{U_i}(u_{i,k}) \qquad \text{for } m \in A_{i,k}$$

Hereby, $A_{i,k}$ is defined as the set of signal points belonging to the subcluster with index k on quality level i, and L is the number of quality levels of the hierarchical modulation scheme. It has to be noted that

$$\sum_{m \in A} p_M(m) = 1$$

is always fulfilled since the individual probability mass functions are normalized, the mapping between labels and signal points is bijective and the mapping of the signal points into the subclusters is regular and bijective.

For the highest quality level, each subcluster simplifies to a single signal point. The resulting probability of each individual signal point is simply the product of all the subclusters' probabilities on the different quality levels to which said signal point belongs.

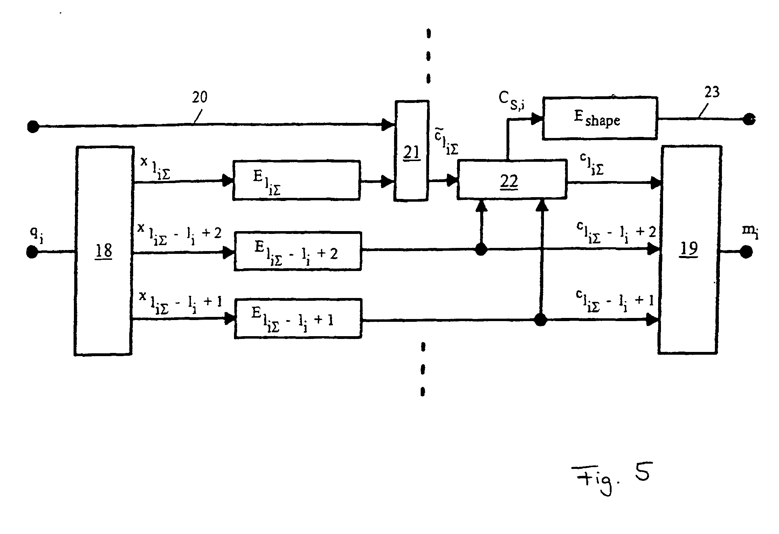

In Fig. 5, the structure of a hierarchical shaping encoder for quality level i is shown. The source signal bitstream $q_i$ is forwarded to the partitioning means 18, which transform said source signal bitstream $q_i$ into the mapping level bitstreams $x_{l_{i\Sigma}-l_i+1}$, $x_{l_{i\Sigma}-l_i+2}$, ..., $x_{l_{i\Sigma}}$ which correspond to the quality level i. Hereby, $l_{i\Sigma} - l_i + 1$ denotes the index of the lowest mapping level bitstream corresponding to quality level i, whereas $l_{i\Sigma}$ denotes the index of the highest mapping level bitstream corresponding to quality level i. The index $l_{i\Sigma}$ is given by

$$l_{i\Sigma} = \left( \sum_{j=0}^{i} l_j \right) - 1,$$

whereby the parameters $l_j$ denote the number of mapping levels belonging to a lower quality level j.

For the example given in Fig. 3A, L=2, $l_0$=2, and $l_1$=1. For the robust quality level, i=0, and $l_{0\Sigma} = l_0 - 1 = 1$. The highest mapping level bitstream of quality level 0 is therefore $x_1$. Accordingly, $l_{0\Sigma} - l_0 + 1 = 1 - 2 + 1 = 0$, and therefore the lowest mapping level bitstream of quality level 0 is $x_0$.

The bitstreams $x_{l_{i\Sigma}-l_i+1}$, $x_{l_{i\Sigma}-l_i+2}$, ..., $x_{l_{i\Sigma}}$ are forwarded to the respective encoders $E_{l_{i\Sigma}-l_i+1}$, $E_{l_{i\Sigma}-l_i+2}$, ..., $E_{l_{i\Sigma}}$. For each mapping level, a separate encoder is provided, which adds coding redundancy to the mapping level bitstreams. The encoded bitstreams $c_{l_{i\Sigma}-l_i+1}$, $c_{l_{i\Sigma}-l_i+2}$ of the lower mapping levels are directly forwarded to the (sub-)mapping unit 19 for quality level i. The encoded bitstream generated by the encoder $E_{l_{i\Sigma}}$ is forwarded, together with the coding redundancy 20 for the shaping information from the last data block, to the converter 21. By interleaving said two bitstreams, the bitstream $\tilde{c}_{l_{i\Sigma}}$ is generated. Said bitstream $\tilde{c}_{l_{i\Sigma}}$ is forwarded to the shaper 22 for quality level i, which preferably is a Trellis shaper. By adding shaping bits to the bitstream of the highest mapping level, the shaper 22 enforces a predefined probability distribution within the hyper constellation points $u_{i,k}$ of quality level i. By adding shaping bits, the bitstream $\tilde{c}_{l_{i\Sigma}}$ is transformed into the shaped bitstream $c_{l_{i\Sigma}}$, which is forwarded to the mapping unit 19.

The three bitstreams $c_{l_{i\Sigma}-l_i+1}$, $c_{l_{i\Sigma}-l_i+2}$, ..., $c_{l_{i\Sigma}}$ serve as input bitstreams for the mapping unit 19 for quality level i, which maps said mapping labels to symbols $m_i$. In order to be able to map the arriving bits of said three bitstreams to the symbol $m_i$, the data rates of the three bitstreams $c_{l_{i\Sigma}-l_i+1}$, $c_{l_{i\Sigma}-l_i+2}$, ..., $c_{l_{i\Sigma}}$ have to be equal to each other. This can be achieved by carefully choosing the data rates of the bitstreams $x_{l_{i\Sigma}-l_i+1}$, $x_{l_{i\Sigma}-l_i+2}$, ..., $x_{l_{i\Sigma}}$ and the extent of redundancy added by the encoders $E_{l_{i\Sigma}-l_i+1}$, $E_{l_{i\Sigma}-l_i+2}$, ..., $E_{l_{i\Sigma}}$ .

The shaping information $C_{S,i}$ for quality level i, which is preferably generated by the shaper 22 by applying a Trellis algorithm and solving a path optimization problem, is forwarded to the shaping encoder $E_{shape}$. The shaping encoder $E_{shape}$ generates coding redundancy 23 for said shaping information $C_{S,i}$, which is transmitted together with the next data block.

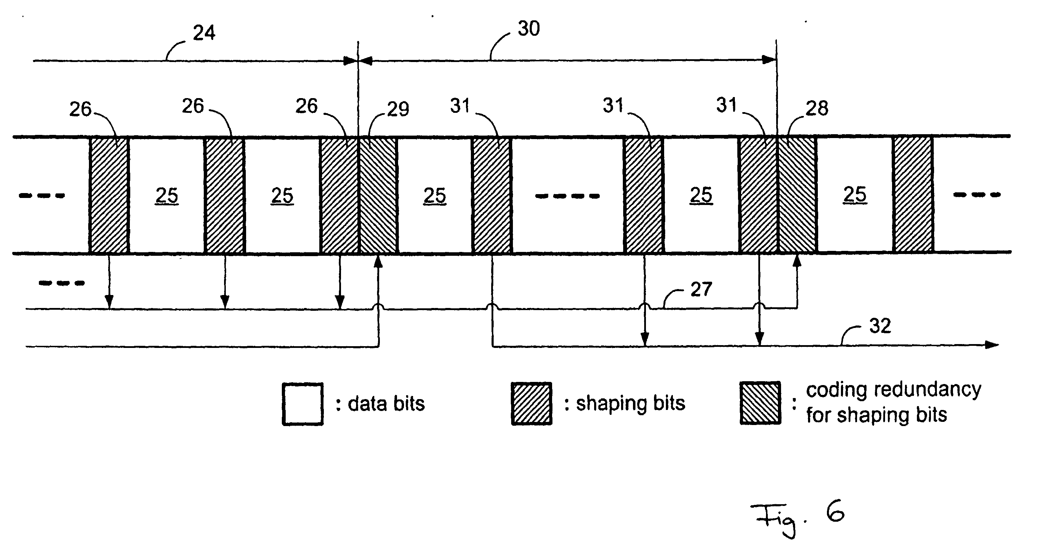

Fig. 6 shows how the transmission of data bits, shaping information and coding redundancy for the shaping information can be scheduled. In the region 24, for which the shaping operation has already been carried out, data blocks 25 and shaping information 26 are alternatingly transmitted. The shaping information 26 is encoded by a shaping encoder, which generates shaping information coding redundancy 28. Said shaping information coding redundancy 28 is transmitted with a time delay 27 relative to the corresponding shaping information 26, whereby the length of said time delay 27 exceeds the length of the shaping window 30.

The reason for this time delay is that within the shaping window 30, the trellis algorithm used for performing the shaping operation is active, which means that the blocks of shaping information 31 within said current shaping window 30 are still subject to changes. For this reason, the shaping information coding redundancy for the blocks of shaping information 31 cannot be generated until said blocks of shaping information 31 have left the current shaping window 30. Therefore, the shaping information coding redundancy for the blocks of shaping information 31 is transmitted with a time delay 32 relative to said shaping information 31.

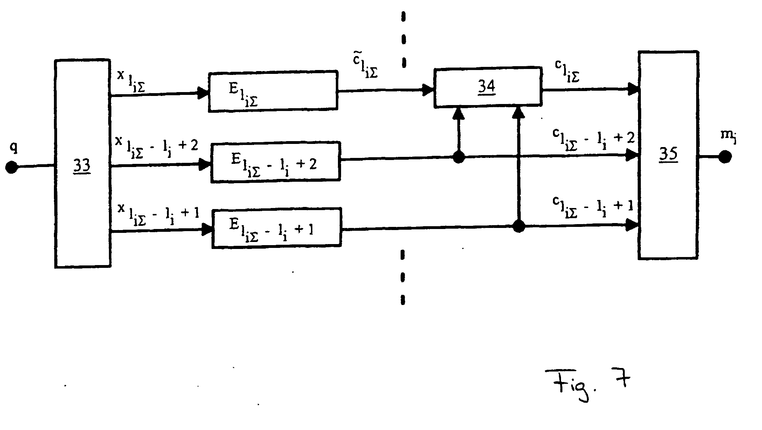

In Fig. 7, a simplified hierarchical shaping encoder for quality level i is shown. As in the solution depicted in Fig. 5, the source signal bitstream $q_i$ is partitioned, by the partitioning means 33, into the bitstreams $x_{l_{i\Sigma}-l_i+1}$ , $x_{l_{i\Sigma}-l_i+2}$ , ..., $x_{l_{i\Sigma}}$ . The encoded bitstream $\tilde{c}_{l_{i\Sigma}}$ of the highest mapping level is forwarded to the shaping unit 34, which transforms said encoded bitstream $\tilde{c}_{l_{i\Sigma}}$ into the shaped bitstream $c_{l_{i\Sigma}}$, which is forwarded to the mapping unit 35. The shaping information generated by the shaper 34 is not encoded, though. If the transmission conditions are sufficiently good, the shaping encoder can be omitted, and no shaping information coding redundancy is generated.

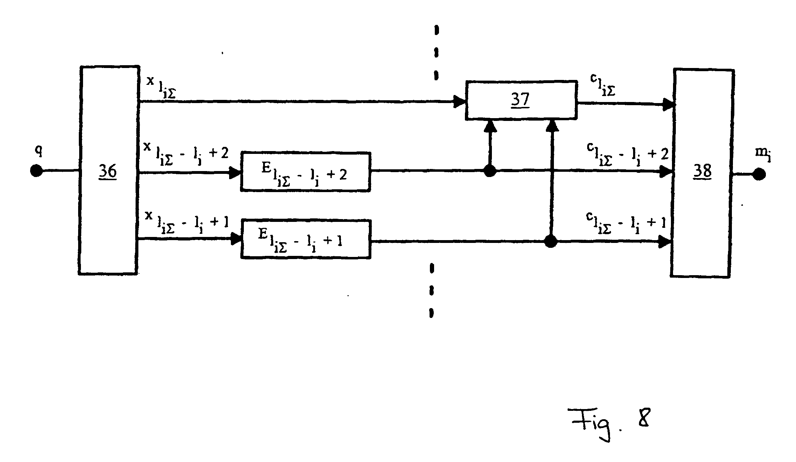

A further simplified hierarchical shaping encoder for quality level i is shown in Fig. 8. As in the solution depicted in Fig. 5, the source signal bitstream $q_i$ is partitioned, by the partitioning means 36, into the bitstreams $x_{l_{i\Sigma}-l_i+1}$ , $x_{l_{i\Sigma}-l_i+2}$ , ..., $x_{l_{i\Sigma}}$ . According to this solution, the bitstream $x_{l_{i\Sigma}}$ for the highest mapping level of quality level i is not encoded at all. The encoder $E_{l_{i\Sigma}}$ for said highest mapping level has been omitted. The bitstream $x_{l_{i\Sigma}}$ is shaped by the trellis shaper 37, and the shaped bitstream $c_{l_{i\Sigma}}$ is forwarded to the mapping unit 38. Especially if the energetic separation between the signal points selected by said highest mapping label is large, it is often not necessary to encode said highest mapping level.

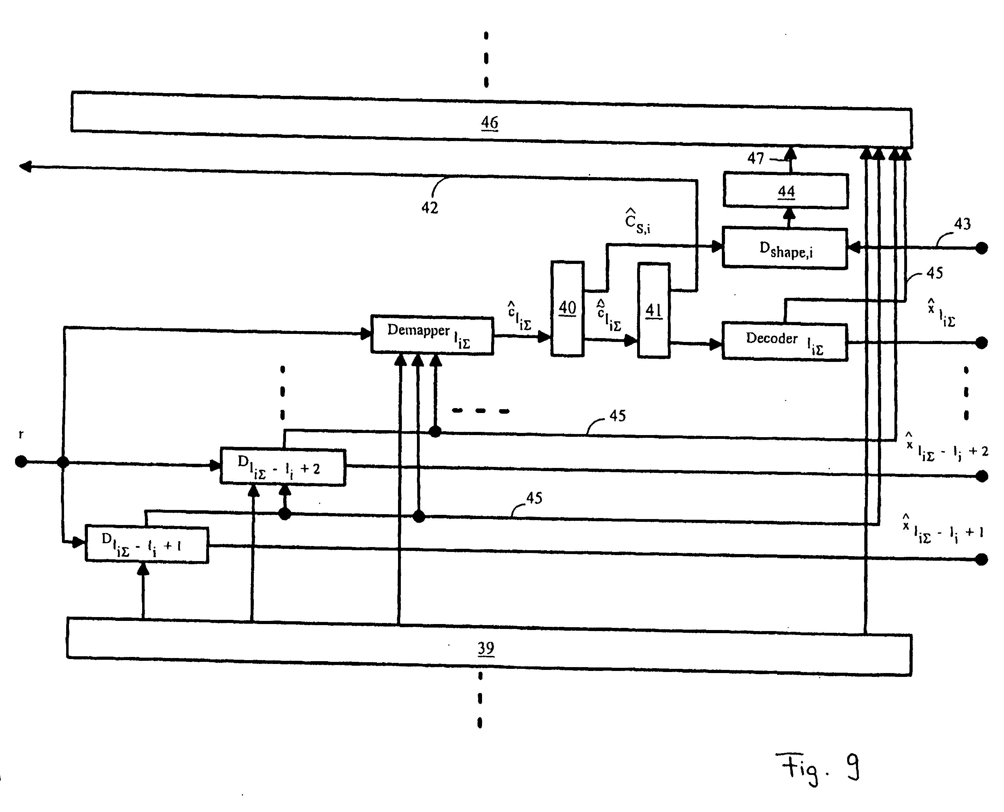

Fig. 9 shows the $i^{th}$ stage of a multi-stage decoder for decoding a hierarchically modulated signal. Received symbols r are forwarded to the combined demapping/decoding units $D_{l_{i\Sigma}-l_i+1}$ and $D_{l_{i\Sigma}-l_i+2}$. On the highest mapping level corresponding to quality level i, the demapping unit $Demapper_{l_{i\Sigma}}$ has been separated from the decoding unit $Decoder_{l_{i\Sigma}}$. The combined demapping/decoding units $D_{l_{i\Sigma}-l_i+1}$ and $D_{l_{i\Sigma}-l_i+2}$ demap the bitstream corresponding to the respective mapping level from the received symbols r. Information 39 from lower quality levels, which comprises reliability information, is considered when said demapping is performed. Next, the combined demapping/decoding units $D_{l_{i\Sigma}-l_i+1}$ and $D_{l_{i\Sigma}-l_i+2}$ decode the demapped data streams and remove the coding redundancy. Thus, the decoded data streams $\hat{x}_{l_{i\Sigma}-l_i+1}$ and $\hat{x}_{l_{i\Sigma}-l_i+2}$ are generated. Additionally, the combined demapping/decoding units $D_{l_{i\Sigma}-l_i+1}$ and $D_{l_{i\Sigma}-l_i+2}$ and the $Decoder_{l_{i\Sigma}}$ generate re-encoded soft or hard decision information 45 which represents an improved version of the received signal r. The re-encoded soft or hard decision information 45 is used by demappers of higher levels.

The demapped bitstream $\hat{c}_{l_{i\Sigma}}$ comprises data blocks, blocks with shaping information, and shaping information coding redundancy, as shown in Fig. 6. In the converter 40, the shaping information $\hat{C}_{S,i}$ is separated from the demapped bitstream $\hat{c}_{l_{i\Sigma}}$ and forwarded to the decoder $D_{shape,i}$ for the shaping information of quality level i. The converter 41 separates the shaping information coding redundancy 42 for the last block, which has been transmitted with a time delay, from the data stream. The remaining bitstream, from which both the shaping information and the shaping information coding redundancy have been separated, is decoded by the $Decoder_{l_{i\Sigma}}$ in order to generate the decoded bitstream $\hat{x}_{l_{i\Sigma}}$ .

Together with the shaping information $\hat{C}_{S,i}$, also the shaping information coding redundancy 43 for the current block is forwarded to the decoder $D_{shape,i}$ for the shaping information of quality level i. By means of said shaping information coding redundancy, the decoder $D_{shape,i}$ can generate a bitstream of error-corrected shaping information, which is forwarded to the reliability information generation means 44. Said reliability information generation means 44 use the decoded and error-corrected shaping information for generating a re-encoded version 47 of said shaping information. The quality of the respective reliability information (the re-encoded soft or hard decision information 45 and the re-encoded version 47 of the shaping information) is superior to the initially received information, because transmission errors within the shaping information and within the data have been removed.

Both the re-encoded soft or hard decision information 45 and the re-encoded version 47 of the shaping information are part of the information 46 for the higher quality levels. The higher quality levels derive information about the signal constellations within the lower quality levels from said re-encoded information 45, 47.

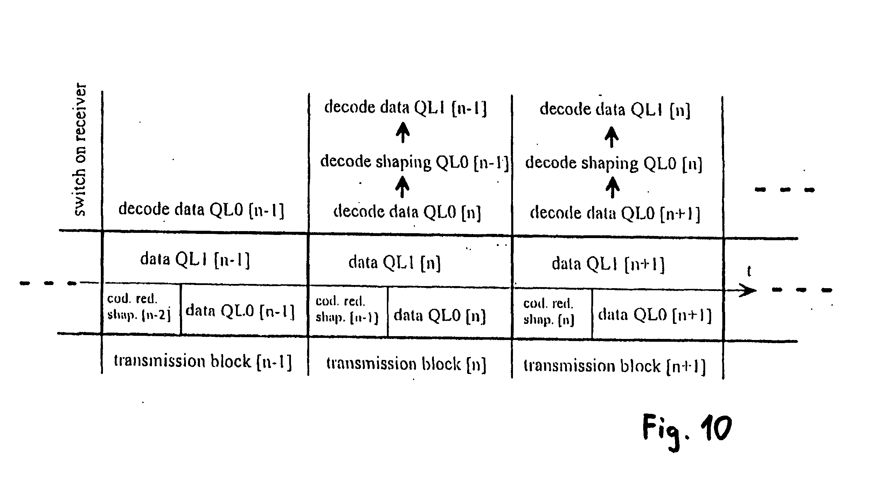

In Fig. 10, it is shown how a sequence of received data blocks is decoded by a multi-stage decoder. The hierarchical modulation scheme comprises two layers, a robust layer of quality level 0 (QL0) and an enhancement layer of quality level 1 (QL1). The receiver is switched on when the transmission block [n-1] is received. The transmission block [n-1] comprises data of quality level 0 for block [n-1], and data of quality level 1 for block [n-1]. Coding redundancy for any shaping information is always received with a time delay of one block. Therefore, the shaping information coding redundancy for block [n-2] is transmitted within the transmission block [n-1].

During the reception of transmission block [n-1], the receiver can decode the data of quality level 0. The shaping information coding redundancy for transmission block [n-1] is not available yet. This shaping information coding redundancy is required for generating error-corrected shaping information, and said error-corrected shaping information is required for providing the higher decoding stages of the multi-stage decoder with a re-encoded bitstream. Therefore, it is not possible to decode the data of quality level 1 for block [n-1] during the reception of the transmission block [n-1].

Next, the transmission block [n] is received, which contains data of quality level 0 for block [n], data of quality level 1 for block [n], and the shaping information coding redundancy for transmission block [n-1]. The data of quality level 0 for block [n] can be decoded during the reception of transmission block [n]. The shaping information coding redundancy for transmission block [n-1] is now available, and therefore, the shaping information for transmission block [n-1] can be decoded. As soon as the error-corrected shaping information for block [n-1] is known, it is possible to decode the data of quality level 1 of block [n-1].

The transmission block [n+1] contains data of quality level 0 for block [n+1], data of quality level 1, and the shaping information coding redundancy for block [n]. Accordingly, it is possible to decode the data of quality level 0 for block [n+1], the shaping information for block [n], and data of quality level 1 for the preceding transmission block [n].

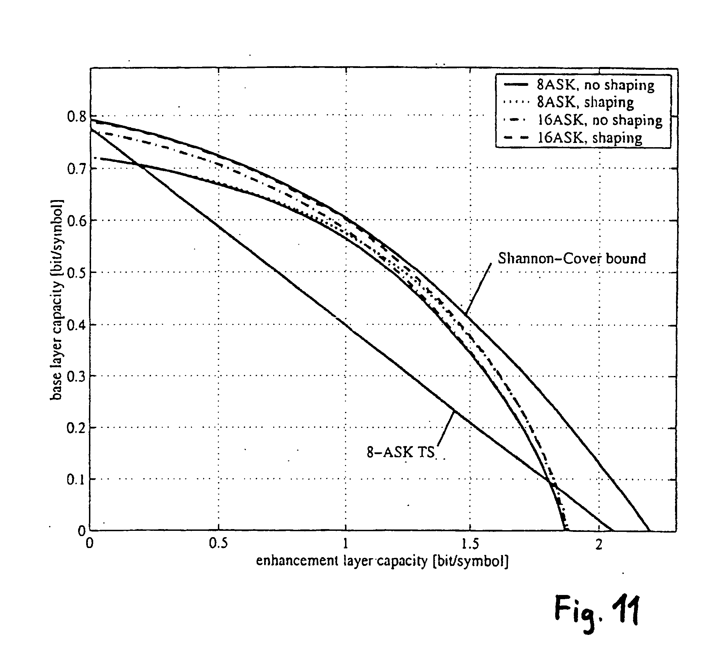

Next, examples for the performance increase that can be achieved with a shaped hierarchical modulation scheme according to the invention are presented. The first example, depicted in Fig. 11, shows the performance gain due to the invention in an Additive White Gaussian Noise (AWGN) channel for systems with two quality levels, whereby the signal to noise ratio of the robust level is 0 dB, and whereby the signal to noise ratio of the enhancement level is 10 dB. As reference curves the optimally achievable performance of the Shannon-Cover bound is included. Also the well known, but not very efficient, time sharing (TS) performance is given. Two signal constellations are compared: 8-ASK and 16-ASK, each with and without shaping. The 8-ASK constellation uses one mapping level for the robust level and two mapping levels for the enhancement level, whereas 16-ASK uses two mapping levels for each quality level. Therefore the 16-ASK scheme applies independent mapping on two quality levels as described in the invention. Clearly it results in the highest performance of the five practical schemes presented and is also the most flexible one of the four examples presented using Amplitude Shift Keying (ASK).

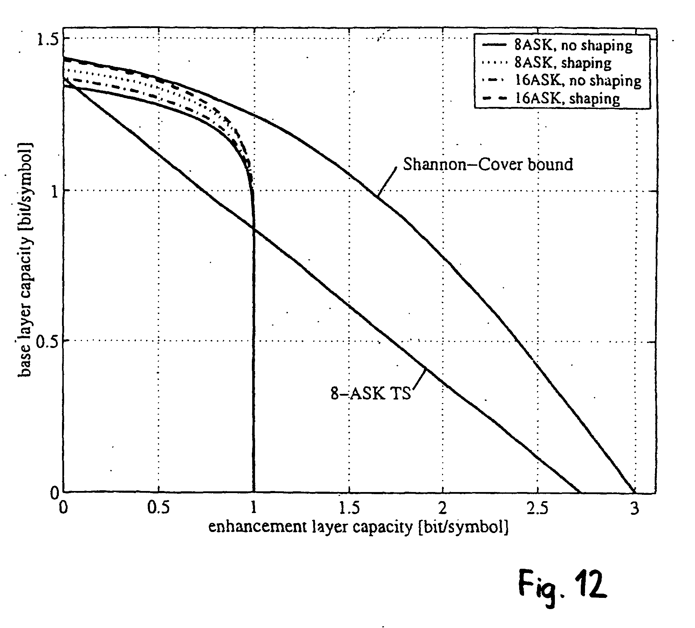

A second example is given in Fig. 12. Again 8-ASK and 16-ASK are compared. They both use only one mapping level for the enhancement layer and two or three mapping levels respectively for the robust layer. This change in mapping is due to the different signal to noise ratios for the robust layer and for the enhancement layer. The signal to noise ratio for the robust layer is 5 dB, and the signal to noise ratio for the enhancement layer is 15 dB. It is further influenced by the region of pairs of transmission rates that we want to achieve in this example. Again 16-ASK is the scheme performing best.

## Claims

1. Transmitter for signals modulated according to a hierarchical modulation scheme, comprising

   - partitioning means (18, 33, 36) adapted for partitioning source signal bitstreams ($q_i$) of L 2 different quality levels into bitstreams ($x_0$ ...., $x_{l-1}$) for l mapping levels, each quality level i being represented by $l_i$ corresponding mapping labels,
   - mapping means (19, 35, 38) adapted for setting the $l_i$ mapping labels corresponding to said quality level i, thus selecting one of $2^{l_i}$ hyper constellation points ($u_{i,k}$) of said quality level i, with each hyper constellation point ($u_{i,k}$) representing a subcluster of a set of signal points.

   **characterized by**

   - means for shaping, individually for at least one quality level i, the probability distribution within said at least one of the quality levels, said means for shaping being adapted for assigning unequally distributed probabilities ($p_{U_i}$ ($u_{i,k}$)) to the $2^{l_i}$ hyper constellation points ($u_{i,k}$) of a quality level i by adding shaping bits to at least one bitstream for mapping levels of quality level i.

2. Transmitter according to any of the preceding claims, **characterized in that** each hyper constellation point ($u_{i,k}$)

corresponds either to the coordinate of the center of the subcluster it represents, or to a signal point.

3. Transmitter according to any of the preceding claims, **characterized by** means for multilevel coding, which comprise a set of encoders ($E_0$, ..., $E_{l-1}$) for separately encoding the bitstreams of said l mapping levels.

4. Transmitter according to claim 1 or claim 2, **characterized by** means for multi-level coding. which comprise a set of encoders adapted for separately encoding, for at least one quality level, the bitstreams of all except the highest mapping level ($x_{l_i\Sigma}$)of a respective quality level.

5. Transmitter according to any of the preceding claims, **characterized in that** said means for shaping comprise at least one shaping unit (22, 34, 37) per quality level, adapted for enforcing, according to shaping information that is utilized by said shaping units (22, 34, 37) during the shaping operation, an unequally distributed probability distribution of the $2^{l_i}$ hyper constellation points ($u_{i,k}$) of said quality level by adding shaping bits to at least one bitstream for mapping levels of quality level i.

6. Transmitter according to any of the preceding claims, **characterized in that** said shaping units (22, 34, 37) are realized as Trellis shaping units.

7. Transmitter according to any of the preceding claims, **characterized by** shaping information encoding means ($E_{shape}$) for at least one of said quality levels for generating shaping information coding redundancy (28, 29), with the transmitter being adapted for transmitting said shaping information coding redundancy (28, 29) together with said shaping information (26, 31), in order to protect said shaping information.

8. Transmitter according to any of the preceding claims, **characterized in that** said shaping information encoding means ($E_{shape}$) are adapted for choosing the extent of shaping information coding redundancy (28, 29) for quality level i according to the signal to noise ratio of quality level i+1.

9. Transmitter according to any of the preceding claims, **characterized in that** said transmitter is adapted for transmitting said shaping information coding redundancy (28, 29) with a time delay relative to said shaping information (26, 31), whereby said time delay is larger than the length of a shaping window (30) used by the shaping units (22, 34, 37) for enforcing the desired probability distribution.

10. Transmitter according to any of the preceding claims, **characterized in that** said probability distribution ($p_{U_i}(u_{i,k})$) within at least one quality level i is a discrete Gaussian distribution.

11. Transmitter according to any of the preceding claims, **characterized in that** said set of signal points (6, ..., 13) is a non-uniformly spaced set of signal points.

12. Transmitter according to any of the preceding claims, **characterized in that** said set of signal points (6, ..., 13) is a regular set of signal points, with the subclusters (14, 15, 16, 17) of a respective quality level i being symmetrically distributed around zero.

13. Transmitter according to any of the preceding claims, **characterized in that** said modulation scheme is an Amplitude Shift Keying (ASK) or a Quadrature Amplitude Modulation (QAM) scheme, and particularly a 8-ASK, 16-ASK, 64-QAM or 256-QAM scheme.

14. Multi-stage decoder for decoding a signal modulated according to a hierarchical modulation scheme, said signal comprising bitstreams for l mapping levels that correspond to L ≥ 2 different quality levels, each quality level i being represented by $l_i$ corresponding mapping levels,
   **characterized by**

   - decoding means, for each quality level $l_i$ adapted for decoding the $l_i$ corresponding mapping level bitstreams, and for providing the decoding means of higher quality levels with reliability information (45) on the decoded mapping level bitstreams;
   - means for separating (40) shaping information for at least one quality level i from the received mapping level bitstreams for quality level i;
   - reliability information generation means (44) adapted for producing reliability information (47) on the shaping information for quality level i, and for providing the decoding means of higher quality levels with said reliability information (47) on the shaping information.

15. Multi-stage decoder according to claim 14, **characterized in that** said decoding means are adapted for selecting one of $2^{l_i}$ hyper constellation points $(u_{i,k})$ of said quality level i by decoding the $l_i$ mapping labels corresponding to said quality level i, whereby each hyper constellation point $(u_{i,k})$ corresponds either to the coordinate of the center of a subcluster it represents, or to a signal point.

16. Multi-stage decoder according to claim 14 or claim 15, **characterized by** means for separating (41) shaping information coding redundancy (42) for quality level i from the received mapping level bitstreams for quality level i.

17. Multi-stage decoder according to any of claims 14 to 16, **characterized by** means for decoding $(D_{shape,i})$ said shaping information $(C_{S,i})$ for quality level i together with said shaping information coding redundancy (43) for quality level i, which are adapted for generating error-corrected shaping information for quality level i.

18. Multi-stage decoder according to any of claims 14 to 17, **characterized by** means for storing a block of received data adapted for storing a block of received data until shaping information coding redundancy for said block of received data has been received.

19. Multi-stage decoder according to claim 17 or claim 18, **characterized in that** said means for decoding $(D_{shape,i})$ are adapted for forwarding said error-corrected shaping information for quality level i to said reliability information generation means (44), which are adapted for producing reliability information (47) on the shaping information for quality level i.

20. Multi-stage decoder according to any of claims 14 to 19, **characterized in that** said reliability information (47) on the shaping information for quality level i is hard-quantised reliability information, with said reliability information generation means (44) being adapted for generating said hard-quantised reliability information by re-encoding said error-corrected shaping information for quality level i.

21. Multi-stage decoder according to any of claims 14 to 20, **characterized in that** said reliability information (45) on said mapping level bitstreams is hard-quantised reliability information, with said decoding means being adapted for generating said hard-quantised reliability Information by re-encoding said decoded mapping level bitstreams.

22. Multi-stage decoder according to any of claims 15 to 21, **characterized in that** each hyper constellation point $(u_{i,k})$ represents a subcluster of a set of signal points, with said set of signal points (6, ..., 13) being a regular set of signal points, with the subclusters (14, 15, 16, 17) of a respective quality level i being symmetrically distributed around zero.

23. Multi-stage decoder according to any of claims 14 to 22, **characterized by** shifting means adapted for shifting, each time a mapping label has been decoded, the hyper constellation points of a corresponding respective subcluster by an offset value $(\sigma_0, \sigma_1, \sigma_2)$, such that the hyper constellation points of said subcluster are centred at zero.

24. Multi-stage decoder according to any of claims 14 to 23, **characterized in that** said modulation scheme is an Amplitude Shift Keying (ASK) or a Quadrature Amplitude Modulation (QAM) scheme, and particularly a 8-ASK, 16-ASK, 64-QAM or 256-QAM scheme.

25. A broadcast signal modulated according to a hierarchical modulation scheme, said broadcast signal comprising bitstreams for 1 mapping levels that correspond to $L \geq 2$ different quality levels, each quality level i being represented by $l_i$ corresponding mapping labels, whereby by setting the $l_i$ mapping labels corresponding to said quality level i, one of $2^{l_i}$ hyper constellation points $(u_{i,k})$ of said quality level i is selected, with each hyper constellation point $(u_{i,k})$ representing a subcluster of a set of signal points,
**characterized in that**
at least one bitstream for mapping levels of quality level i comprises shaping bits, with the probability distributions of the $2^{l_i}$ hyper constellation points $(u_{i,k})$ within at least one of the quality levels being shaped, individually for said at least one of the quality levels, in a way that the $l_i$ hyper constellation points $(u_{i,k})$ of a quality level i occur with unequally distributed probabilities $(p_{U_i}(u_{i,k}))$.

26. Broadcast signal according to claim 25, **characterized in that** said broadcast signal comprises separately encoded bitstreams of said l mapping levels.

**27.** Broadcast signal according to claim 25 or claim 26, **characterized in that** the probability distributions of the $2^{l_i}$ hyper constellation points within at least one of the quality levels are shaped according to shaping information that is utilized during the shaping operation, whereby said broadcast signal comprises both said shaping information and said encoded bitstreams.

**28.** Broadcast signal according to any of claims 25 to 27, **characterized in that** said broadcast signal comprises shaping information coding redundancy which is generated by encoding said shaping information.

**29.** Broadcast signal according to any of claims 25 to 28, **characterized in that** said probability distribution within at least one quality level i is a discrete Gaussian distribution.

**30.** Broadcast signal according to any of claims 25 to 29, **characterized in that** said set of signal points is a non-uniformly spaced set of signal points.

**31.** Broadcast signal according to any of claims 25 to 30, **characterized in that** said set of signal points is a regular set of signal points, with the subclusters of a respective quality level i being symmetrically distributed around zero.

**32.** Broadcast signal according to any of claims 25 to 31, **characterized in that** said modulation scheme is an Amplitude Shift Keying (ASK) or a Quadrature Amplitude Modulation (QAM) scheme, and particularly a 8-ASK, 16-ASK, 64-QAM or 256-QAM scheme.

**33.** A method for generating a broadcast signal according to a hierarchical modulation scheme, the method comprising the steps of

- partitioning source signal bitstreams ($q_i$) of L $\geq$ 2 different quality levels into bitstreams ($x_0$ ..... $x_{l-1}$) for 1 mapping levels, each quality level i being represented by $l_i$ corresponding mapping labels;
- setting the $l_i$ mapping labels corresponding to said quality level i, thus selecting one of $2^{l_i}$ hyper constellation points ($u_{i,k}$) of said quality level i, with each hyper constellation point ($u_{i,k}$) representing a subcluster of a set of signal points;

**characterized by**

- assigning, individually for at least one quality level, unequally distributed probabilities ($p_{U_i}(u_{i,k})$) to the $2^{l_i}$ hyper constellation points ($u_{i,k}$) of a quality level i by adding shaping bits to at least one bitstream for mapping levels of said quality level

**34.** Method according to claim 33, **characterized in that** bitstreams of said 1 mapping levels are separately encoded.

**35.** Method according to claim 33 or claim 34, **characterized in that** said shaping operation is performed by shaping units in accordance with shaping information that is input, together with the bitstreams that are to be shaped, to said shaping units.

**36.** Method according to any of claims 33 to 35, **characterized by** generating shaping information coding redundancy for at least one of said quality levels, and transmitting said shaping information coding redundancy together with said shaping information in order to protect said shaping information.

**37.** Method according to claim 36, **characterized by** choosing the extent of shaping information coding redundancy for quality level i according to the signal to noise ratio of quality level i+1.

**38.** Method according to any of claims 33 to 37, **characterized in that** said probability distribution within at least one quality level i is a discrete Gaussian distribution.

**Patentansprüche**

**1.** Sender für Signale, welche moduliert sind gemäß eines hierarchischen Modulationsschemas, umfassend

- Partitioniereinrichtungen (18, 33, 36), welche ausgelegt sind zum Partitionieren von Quellensignalbitströmen

($q_i$) von L $\geqq$ 2 verschiedenen Qualitätsniveaus in Bitströme ($x_0$, ..., $x_{1-i}$) für 1 Abbildungsniveaus, wobei jedes Qualitätsniveau i repräsentiert wird durch $l_i$ entsprechende Abbildungsmarker,

- Abbildungseinrichtungen (19, 35, 38), welche ausgelegt sind zum Einstellen der $l_i$ Abbildungsmarker, welche dem Qualitätsniveau i entsprechen, wobei dadurch einer von $2^{l_i}$ Hyperkonstellationspunkten ($u_{i,k}$) des Qualitätsniveaus i ausgewählt wird, wobei jeder Hyperkonstellationspunkt ($u_{i,k}$) ein Untercluster eines Satzes von Signalpunkten repräsentiert,

**gekennzeichnet durch**

- Einrichtungen zum Formen, individuell für zumindest ein Qualitätsniveau i, der Wahrscheinlichkeitsverteilung innerhalb des zumindest einen der Qualitätsniveaus, wobei die Einrichtungen zum Formen ausgelegt sind zum Zuweisen von ungleich verteilten Wahrscheinlichkeiten ($p_{U_i}$ ($u_{i,k}$)) zu den $2^{l_i}$ Hyperkonstellationspunkten ($u_{i,k}$) eines Qualitätsniveaus i **durch** Addieren von Formbits zu zumindest einem Bitstrom für Abbildungsniveaus des Qualitätsniveaus i.

2. Sender gemäß einem der vorhergehenden Ansprüche, **dadurch gekennzeichnet, dass** jeder Hyperkonstellationspunkt ($u_{i,k}$) entweder der Koordinate des Zentrums des Unterclusters, welches er repräsentiert, oder einem Signalpunkt entspricht.

3. Sender gemäß einem der vorhergehenden Ansprüche, **gekennzeichnet durch** Einrichtungen für ein Codieren mit mehreren Niveaus, welche einen Satz von Codierern ($E_0$, ..., $E_{l-i}$) umfassen zum getrennten Codieren der Bitströme der 1 Abbildungsniveaus.

4. Sender gemäß Anspruch 1 oder Anspruch 2, **gekennzeichnet durch** Einrichtungen für ein Codieren mit mehreren Niveaus, welche einen Satz von Codierern umfassen, welche ausgelegt sind für ein getrenntes Codieren, für zumindest ein Qualitätsniveau, der Bitströme von allen außer dem höchsten Abbildungsniveau ($x_{l_{i\Sigma}}$) eines entsprechenden Qualitätsniveaus.

5. Sender gemäß einem der vorhergehenden Ansprüche, **dadurch gekennzeichnet, dass** die Einrichtungen zum Formen zumindest eine Formeinheit (22, 34, 37) pro Qualitätsniveau umfassen, welche ausgelegt sind zum Durchsetzen, entsprechend Forminformation, welche verwendet wird durch die Formeinheiten (22, 34, 37) während des Formvorgangs, einer ungleich verteilten Wahrscheinlichkeitsverteilung der $2^{l_i}$ Hyperkonstellationspunkte ($u_{i,k}$) des Qualitätsniveaus durch Addieren von Formbits zu zumindest einem Bitstrom für Abbildungsniveaus des Qualitätsniveaus i.

6. Sender gemäß einem der vorhergehenden Ansprüche, **dadurch gekennzeichnet, dass** die Formeinheiten (22, 34, 37) als Trellis-Formeinheiten realisiert sind.

7. Sender gemäß einem der vorhergehenden Ansprüche, **gekennzeichnet durch** Forminformationcodiereinrichtungen ($E_{shape}$) für zumindest eines der Qualitätsniveaus zum Generieren von Forminformationscodierredundanz (28, 29), wobei der Sender ausgelegt ist zum Senden bzw. Übertragen der Forminformationscodierredundanz (28, 29) zusammen mit der Forminformation (26, 31), um die Forminformation zu schützen.

8. Sender gemäß einem der vorhergehenden Ansprüche, **dadurch gekennzeichnet, dass** die Forminformationscodiereinrichtungen ($E_{shape}$) ausgelegt sind zum Auswählen des Ausmaßes der Forminformationscodierredundanz (28, 29) für Qualitätsniveau i entsprechend des Signal-zu-Rausch-Verhältnisses des Qualitätsniveaus i+1.

9. Sender gemäß einem der vorhergehenden Ansprüche, **dadurch gekennzeichnet, dass** der Sender ausgelegt ist zum Senden bzw. Übertragen der Forminformationscodierredundanz (28, 29) mit einer Zeitverzögerung relativ zu der Forminformation (26, 31), wobei die Zeitverzögerung größer ist als die Länge eines Formfensters (30), welches verwendet wird durch die Formeinheiten (22, 34, 37) zum Durchsetzen der gewünschten Wahrscheinlichkeitsverteilung.

10. Sender gemäß einem der vorhergehenden Ansprüche, **dadurch gekennzeichnet, dass** die Wahrscheinlichkeitsverteilung ($p_{U_i}$ ($u_{i,k}$)) innerhalb zumindest eines Qualitätsniveaus i eine diskrete Gauss-Verteilung ist.

11. Sender gemäß einem der vorhergehenden Ansprüche, **dadurch gekennzeichnet, dass** der Satz von Signalpunkten (6, ..., 13) ein nicht-uniform beabstandeter Satz von Signalpunkten ist.

**12.** Sender gemäß einem der vorhergehenden Ansprüche, **dadurch gekennzeichnet, dass** der Satz von Signalpunkten (6, ..., 13) ein regulärer Satz von Signalpunkten ist, wobei die Untercluster (14, 15, 16, 17) eines entsprechenden Qualitätsniveaus i symmetrisch um Null verteilt sind.

**13.** Sender gemäß einem der vorhergehenden Ansprüche, **dadurch gekennzeichnet, dass** das Modulationsschema ein Amplitudenumtastungs-(ASK)- oder ein Quadratur-Amplituden-Modulations-(QAM)-Schema, und insbesondere eine 8-ASK-, 16-ASK-, 64-QAM- oder 256-QAM-Schema ist.

**14.** Mehrstufendecoder zum Decodieren eines Signals, welches entsprechend eines hierarchischen Modulationsschemas moduliert wurde, wobei das Signal Bitströme für 1 Abbildungsniveaus umfasst, welche $L \geqq 2$ verschiedenen Qualitätsniveaus entsprechen, wobei jedes Qualitätsniveau i repräsentiert wird durch $l_i$ entsprechende Abbildungsniveaus,
**gekennzeichnet durch**

- Decodiereinrichtungen für jedes Qualitätsniveau i, welche ausgelegt sind zum Decodieren der $l_i$ entsprechenden Abbildungsniveaubitströme und zum Versorgen der Decodiereinrichtungen von Niveaus höherer Qualität mit Zuverlässigkeitsinformation (45) bezüglich der decodierten Abbildungsniveaubitströme;
- Einrichtungen zum Trennen (40) von Forminformation für zumindest ein Qualitätsniveau i von den empfangenen Abbildungsniveaubitströmen für Qualitätsniveau i;
- Zuverlässigkeitsinformationserzeugungseinrichtungen (44), welche ausgelegt sind zum Produzieren von Zuverlässigkeitsinformation (47) bezüglich der Forminformation für Qualitätsniveau i und zum Versorgen der Decodiereinrichtungen von Niveaus höherer Qualität mit der Zuverlässigkeitsinformation (47) bezüglich der Forminformation.

**15.** Mehrstufendecoder gemäß Anspruch 14, **dadurch gekennzeichnet, dass** die Decodiereinrichtungen ausgelegt sind zum Auswählen eines von $2^{l_i}$ Hyperkonstellationspunkten ($u_{i,k}$) des Qualitätsniveaus i durch Decodieren der $l_i$ Abbildungsmarker, welche dem Qualitätsniveau i entsprechen, wobei jeder Hyperkonstellationspunkt ($u_{i,k}$) entweder der Koordinate des Zentrums eines Underclusters, welches er repräsentiert, oder einem Signalpunkt entspricht.

**16.** Mehrstufendecoder gemäß Anspruch 14 oder Anspruch 15, **gekennzeichnet durch** Einrichtungen zum Trennen (41) von Forminformationscodierredundanz (42) für Qualitätsniveau i von den empfangenen Abbildungsniveaubitströmen für Qualitätsniveau i.

**17.** Mehrstufendecoder gemäß einem der Ansprüche 14 bis 16, **gekennzeichnet durch** Einrichtungen zum Decodieren ($D_{shape,i}$) der Forminformation ($C_{S,i}$) für Qualitätsniveau i zusammen mit der Forminformationscodierredundanz (43) für Qualitätsniveau i, welche ausgelegt sind zum Erzeugen von fehlerkorrigierter Forminformation für Qualitätsniveau i.

**18.** Mehrstufendecoder gemäß einem der Ansprüche 14 bis 17, **gekennzeichnet durch** Einrichtungen zum Speichern eines Blocks von empfangenen Daten, welche ausgelegt sind zum Speichern eines Blocks von empfangenen Daten bis die Forminformationscodierredundanz für den Block von empfangenen Daten empfangen wurde.

**19.** Mehrstufendecoder gemäß Anspruch 17 oder Anspruch 18, **dadurch gekennzeichnet, dass** die Einrichtungen zum Decodieren ($D_{shape,i}$) ausgelegt sind zum Weiterleiten der fehlerkorrigierten Forminformation für Qualitätsniveau i zu den Zuverlässigkeitsinformationserzeugungseinrichtungen (44), welche ausgelegt sind zum Produzieren von Zuverlässigkeitsinformation (47) bezüglich der Forminformation für Qualitätsniveau i.

**20.** Mehrstufendecoder gemäß einem der Ansprüche 14 bis 19, **dadurch gekennzeichnet, dass** die Zuverlässigkeitsinformation (47) bezüglich der Forminformation für das Qualitätsniveau i hart quantisierte Zuverlässigkeitsinformation ist, wobei die Zuverlässigkeitsinformationserzeugungseinrichtungen (44) ausgelegt sind zum Erzeugen der hart quantisierten Zuverlässigkeitsinformation durch Wiedercodieren der fehlerkorrigierten Forminformation für Qualitätsniveau i.

**21.** Mehrstufendecoder gemäß einem der Ansprüche 14 bis 20, **dadurch gekennzeichnet, dass** die Zuverlässigkeitsinformation (45) bezüglich der Abbildungsniveaubitströme hart quantisierte Zuverlässigkeitsinformation ist, wobei die Decodiereinrichtungen ausgelegt sind zum Erzeugen der hart quantisierten Zuverlässigkeitsinformation durch Wiedercodieren der decodierten Abbildungsniveaubitströme.

**22.** Mehrstufendecoder gemäß einem der Ansprüche 15 bis 21, **dadurch gekennzeichnet, dass** jeder Hyperkonstellationspunkt ($u_{i,k}$) ein Untercluster eines Satzes von Signalpunkten repräsentiert, wobei der Satz von Signalpunkten (6, ..., 13) ein regulärer Satz von Signalpunkten ist, wobei die Untercluster (14, 15, 16, 17) eines entsprechenden Qualitätsniveaus i symmetrisch um Null verteilt ist.

**23.** Mehrstufendecoder gemäß einem der Ansprüche 14 bis 22, **gekennzeichnet durch** Verschiebeeinrichtungen, welche ausgelegt sind zum Verschieben, jedes Mal, wenn ein Abbildungsmarker decodiert wurde, der Hyperkonstellationspunkte eines entsprechenden Unterclusters um einen Versatz- bzw. Verschiebewert ($\sigma_0$, $\sigma_1$, $\sigma_2$), derart, dass die Hyperkonstellationspunkte der Untercluster bei Null zentriert sind.

**24.** Mehrstufendecoder gemäß einem der Ansprüche 14 bis 23, **dadurch gekennzeichnet, dass** das Modulationsschema ein Amplitudenumtastungs-(ASK)- oder ein Quadratur-Amplituden-Modulations-(QAM)-Schema, und insbesondere ein 8-ASK-, 16-ASK-, 64-QAM- oder 256-QAM-Schema ist.

**25.** Rundfunksignal, welches moduliert ist gemäß einem hierarchischen Modulationsschema, wobei das Rundfunksignal Bitströme umfasst für 1 Abbildungsniveaus, welche L $\geqq$ 2 verschiedenen Qualitätsniveaus entsprechen, wobei jedes Qualitätsniveau i repräsentiert wird durch $l_i$ entsprechende Abbildungsmarker, wobei durch Einstellen der $l_i$ Abbildungsmarker, welche dem Qualitätsniveau i entsprechen, einer von $2^{l_i}$ Hyperkonstellationspunkten ($u_{i,k}$) des Qualitätsniveaus i ausgewählt wird, wobei jeder Hyperkonstellationspunkt ($u_{i,k}$) ein Untercluster eines Satzes von Signalpunkten darstellt,
**dadurch gekennzeichnet, dass**
zumindest ein Bitstrom für Abbildungsniveaus des Qualitätsniveaus i Formbits umfasst, wobei die Wahrscheinlichkeitsverteilungen der $2^{l_i}$ Hyperkonstellationspunkte ($u_{i,k}$) innerhalb zumindest eines der Qualitätsniveaus geformt ist, individuell für das zumindest eine der Qualitätsniveaus, auf eine Weise, dass die $l_i$ Hyperkonstellationspunkte ($u_{i,k}$) eines Qualitätsniveaus i mit ungleich verteilten Wahrscheinlichkeiten ($p_{U_i}$ ($u_{i,k}$)) auftreten.

**26.** Rundfunksignal gemäß Anspruch 25, **dadurch gekennzeichnet, dass** das Rundfunksignal getrennt codierte Bitströme der 1 Abbildungsniveaus umfasst.

**27.** Rundfunksignal gemäß Anspruch 25 oder Anspruch 26, **dadurch gekennzeichnet, dass** die Wahrscheinlichkeitsverteilungen der $2^{l_i}$ Hyperkonstellationspunkte innerhalb zumindest eines der Qualitätsniveaus geformt sind entsprechend Forminformation, welche verwendet wird während des Formvorgangs, wobei das Rundfunksignal sowohl die Forminformation als auch die codierten Bitströme umfasst.

**28.** Rundfunksignal gemäß einem der Ansprüche 25 bis 27, **dadurch gekennzeichnet, dass** das Rundfunksignal Forminformationscodierredundanz umfasst, welche erzeugt wird durch Codieren der Forminformation.

**29.** Rundfunksignal gemäß einem der Ansprüche 25 bis 28, **dadurch gekennzeichnet, dass** die Wahrscheinlichkeitsverteilung innerhalb zumindest eines Qualitätsniveaus i eine diskrete Gauss-Verteilung ist.

**30.** Rundfunksignal gemäß einem der Ansprüche 25 bis 29, **dadurch gekennzeichnet, dass** der Satz von Signalpunkten ein nicht-uniform beabstandeter Satz von Signalpunkten ist.

**31.** Rundfunksignal gemäß einem der Ansprüche 25 bis 30, **dadurch gekennzeichnet, dass** der Satz von Signalpunkten ein regulärer Satz von Signalpunkten ist, wobei die Untercluster eines entsprechenden Qualitätsniveaus i symmetrisch um Null verteilt sind.

**32.** Rundfunksignal gemäß einem der Ansprüche 25 bis 31, **dadurch gekennzeichnet, dass** das Modulationsschema ein Amplitudenumtastungs-(ASK)- oder ein Quadratur-Amplituden-Modulations-(QAM)-Schema, und insbesondere ein 8-ASK-, 16-ASK-, 64-QAM- oder 256-QAM-Schema ist.

**33.** Verfahren zum Erzeugen eines Rundfunksignals gemäß eines hierarchischen Modulationsschemas, wobei das Verfahren die Schritte umfasst:

- Partitionieren von Quellensignalbitströmen ($q_i$) von L $\geqq$ 2 verschiedenen Qualitätsniveaus in Bitströme ($x_0$, ..., $x_{l-i}$) für l Abbildungsniveaus, wobei jedes Qualitätsniveau i repräsentiert wird durch $l_i$ entsprechende Abbildungsmarker;
- Einstellen der $l_i$ Abbildungsmarker, welche dem Qualitätsniveau i entsprechen, wobei dadurch einer von $2^{l_i}$

**EP 1 324 558 B1**

Hyperkonstellationspunkten ($u_{i,k}$) des Qualitätsniveaus i ausgewählt wird, wobei jeder Hyperkonstellationspunkt ($u_{i,k}$) ein Untercluster eines Satzes von Signalpunkten repräsentiert,

**gekennzeichnet durch**

- Zuweisen, individuell für zumindest ein Qualitätsniveau, von ungleich verteilten Wahrscheinlichkeiten ($p_{U_i}$ ($u_{i,k}$)) zu den $2^{l_i}$ Hyperkonstellationspunkten ($u_{i,k}$) eines Qualitätsniveaus i **durch** Addieren von Formbits zu zumindest einem Bitstrom für Abbildungsniveaus des Qualitätsniveaus i.

34. Verfahren gemäß Anspruch 33, **dadurch gekennzeichnet, dass** Bitströme der 1 Abbildungsniveaus getrennt codiert werden.

35. Verfahren gemäß Anspruch 33 oder Anspruch 34, **dadurch gekennzeichnet, dass** der Formvorgang durchgeführt wird durch Formeinheiten in Übereinstimmung mit Forminformation, welche eingegeben wird, zusammen mit den Bitströmen, welche geformt werden sollen, zu den Formeinheiten.

36. Verfahren gemäß einem der Ansprüche 33 bis 35, **gekennzeichnet durch** Erzeugen von Forminformationscodierredundanz für zumindest eines der Qualitätsniveaus und Übermitteln bzw. Senden der Forminformationscodierredundanz zusammen mit der Forminformation, um die Forminformation zu schützen.

37. Verfahren gemäß Anspruch 36, **gekennzeichnet durch** Auswählen des Ausmaßes der Forminformationscodierredundanz für Qualitätsniveau i entsprechend des Signal-zu-Rausch-Verhältnisses des Qualitätsniveaus i+1.

38. Verfahren gemäß einem der Ansprüche 33 bis 37, **dadurch gekennzeichnet, dass** die Wahrscheinlichkeitsverteilung innerhalb zumindest eines Qualitätsniveaus i eine diskrete Gauss-Verteilung ist.


**Revendications**

1. Emetteur pour des signaux qui sont modulés conformément à un schéma de modulation hiérarchique, comprenant :

   un moyen de partitionnement (18, 33, 36) qui est adapté pour partitionner des trains de bits de signal de source ($q_i$) de $L \geq 2$ niveaux de qualité différents selon des trains de bits ($x_0, ... , x_{l-i}$) pour I niveaux de cartographie, chaque niveau de qualité i étant représenté par $l_i$ étiquettes de cartographie correspondantes ;
   un moyen de cartographie (19, 35, 38) qui est adapté pour établir les $l_i$ étiquettes de cartographie correspondant audit niveau de qualité i, d'où ainsi la sélection de l'un de $2^{l_i}$ points d'hyperconstellation ($u_{i,k}$) dudit niveau de qualité i, chaque point d'hyperconstellation ($u_{i,k}$) représentant un sous-groupe d'un jeu de points de signal,

   **caractérisé par** :

   un moyen pour conformer, de façon individuelle pour au moins un niveau de qualité i, la distribution de probabilités à l'intérieur dudit au moins un des niveaux de qualité, ledit moyen de conformation étant adapté pour assigner des probabilités distribuées de façon inégale ($p_{U_i}$ ($u_{i,k}$)) aux $2^{l_i}$ points d'hyperconstellation ($u_{i,k}$) d'un niveau de qualité i en additionnant des bits de conformation à au moins un train de bits pour des niveaux de cartographie de niveau de qualité i.

2. Emetteur selon la revendication précédente, **caractérisé en ce que** chaque point d'hyperconstellation ($u_{i,k}$) correspond soit à la coordonnée du centre du sous-groupe qu'il représente, soit à un point de signal.

3. Emetteur selon l'une quelconque des revendications précédentes, **caractérisé par** un moyen pour un codage multi-niveau, lequel moyen comprend un jeu de codeurs ($E_0, ..., E_{l-i}$) pour coder de façon séparée les trains de bits desdits I niveaux de cartographie.

4. Emetteur selon revendication 1 ou 2, **caractérisé par** un moyen pour un codage multi-niveau, lequel moyen comprend un jeu de codeurs qui sont adaptés pour coder de façon séparée, pour au moins un niveau de qualité, les trains de bits de tous les niveaux à l'exception du niveau de cartographie le plus élevé ($x_{l_{i\Sigma}}$) d'un niveau de qualité respectif.

**5.** Emetteur selon l'une quelconque des revendications précédentes, **caractérisé en ce que** ledit moyen de conformation comprend au moins une unité de conformation (22, 34, 37) par niveau de qualité, qui est adaptée pour forcer, conformément à une information de conformation qui est utilisée par lesdites unités de conformation (22, 34, 37) pendant l'opération de conformation, une distribution de probabilités distribuées de façon inégale des $2^{l_i}$ points d'hyperconstellation ($u_{i,k}$) dudit niveau de qualité en additionnant des bits de conformation à au moins un train de bits pour des niveaux de cartographie d'un niveau de qualité i.

**6.** Emetteur selon l'une quelconque des revendications précédentes, **caractérisé en ce que** lesdites unités de conformation (22, 34, 37) sont réalisées en tant qu'unités de conformation Treillis.

**7.** Emetteur selon l'une quelconque des revendications précédentes, **caractérisé par** un moyen de codage d'information de conformation ($E_{shape}$) pour au moins un desdits niveaux de qualité pour générer une redondance de codage d'information de conformation (28, 29), l'émetteur étant adapté pour émettre ladite redondance de codage d'information de conformation (28, 29) en association avec ladite information de conformation (26, 31) afin de protéger ladite information de conformation.

**8.** Emetteur selon l'une quelconque des revendications précédentes, **caractérisé en ce que** ledit moyen de codage d'information de conformation ($E_{shape}$) est adapté pour choisir l'étendue de la redondance de codage d'information de conformation (28, 29) pour un niveau de qualité i conformément au rapport signal sur bruit du niveau de qualité i + 1.

**9.** Emetteur selon l'une quelconque des revendications précédentes, **caractérisé en ce que** ledit émetteur est adapté pour émettre ladite redondance de codage d'information de conformation (28, 29) moyennant un retard temporel par rapport à ladite information de conformation (26, 31) de telle sorte que ledit retard temporel soit plus grand que la longueur d'une fenêtre de conformation (30) qui est utilisée par les unités de conformation (22, 34, 37) pour forcer la distribution de probabilités souhaitée.

**10.** Emetteur selon l'une quelconque des revendications précédentes, **caractérisé en ce que** ladite distribution de probabilités ($p_{U_i} (u_{i,k})$) dans au moins un niveau de qualité i est une distribution gaussienne discrète.

**11.** Emetteur selon l'une quelconque des revendications précédentes, **caractérisé en ce que** ledit jeu de points de signal (6, ..., 13) est un jeu espacé de façon non uniforme de points de signal.

**12.** Emetteur selon l'une quelconque des revendications précédentes, **caractérisé en ce que** ledit jeu de points de signal (6, ..., 13) est un jeu régulier de points de signal, les sous-groupes (14, 15, 16, 17) d'un niveau de qualité respectif i étant distribués de façon symétrique autour de zéro.

**13.** Emetteur selon l'une quelconque des revendications précédentes, **caractérisé en ce que** ledit schéma de modulation est un schéma de modulation par saut d'amplitude (ASK) ou par amplitude en quadrature (QAM) et de façon davantage particulière, un schéma 8-ASK, 16-ASK, 64-QAM ou 256-QAM.

**14.** Décodeur multi-étage pour décoder un signal qui est modulé conformément à un schéma de modulation hiérarchique, ledit signal comprenant des trains de bits pour l niveaux de cartographie qui correspondent à L ≥ 2 niveaux de qualité différents, chaque niveau de qualité i étant représenté par $l_i$ étiquettes de cartographie correspondantes,

**caractérisé par** :

un moyen de décodage, pour chaque niveau de qualité i, qui est adapté pour décoder les $l_i$ trains de bits.de niveau de cartographie correspondants et pour appliquer sur le moyen de décodage des niveaux de qualité plus élevés moyennant une information de fiabilité (45) concernant les trains de bits de niveau de cartographie décodés ;
un moyen pour séparer (40) l'information de mise en forme pour au moins un niveau de qualité i vis-à-vis des trains de bits de niveau de cartographie reçus pour le niveau de qualité i ;
un moyen de génération d'information de fiabilité (44) qui est adapté pour produire une information de fiabilité (47) concernant l'information de conformation pour le niveau de qualité i et pour appliquer sur le moyen de décodage des niveaux de qualité plus élevés, moyennant ladite information de fiabilité (47) concernant l'information de conformation.

**15.** Décodeur multi-étage selon la revendication 14, **caractérisé en ce que** ledit moyen de décodage est adapté pour sélectionner l'un de $2^{l_i}$ points d'hyperconstellation ($u_{i,k}$) dudit niveau de qualité i en décodant les $l_i$ étiquettes de cartographie correspondant audit niveau de qualité i de telle sorte que chaque point d'hyperconstellation ($u_{i,k}$) corresponde soit à la coordonnée du centre d'un sous-groupe qu'il représente, soit à un point de signal.

16. Décodeur multi-niveau selon la revendication 14 ou 15, **caractérisé par** un moyen pour séparer (41) une redondance de codage d'information de conformation (42) pour le niveau de qualité i vis-à-vis des trains de bits de niveau de cartographie reçus pour le niveau de qualité i.

17. Décodeur multi-étage selon l'une quelconque des revendications 14 à 16, **caractérisé par** un moyen pour décoder ($D_{shape,i}$) ladite information de conformation ($C_{S,i}$) pour le niveau de qualité i en association avec ladite redondance de codage d'information de conformation (43) pour le niveau de qualité i, lequel moyen est adapté pour générer une information de conformation à erreur corrigée pour le niveau de qualité i.

18. Décodeur multi-étage selon l'une quelconque des revendications 14 à 17, **caractérisé par** un moyen pour stocker un bloc de données reçues qui est adapté pour stocker un bloc de données reçues jusqu'à ce qu'une redondance de codage d'information de conformation pour ledit bloc de données reçues ait été reçue.

19. Décodeur multi-étage selon la revendication 17 ou 18, **caractérisé en ce que** ledit moyen de décodage ($D_{shape,i}$) est adapté pour renvoyer ladite information de conformation à erreur corrigée pour le niveau de qualité i sur ledit moyen de génération d'information de fiabilité (44), lequel moyen est adapté pour produire une information de fiabilité (47) concernant l'information de conformation pour le niveau de qualité i.

20. Décodeur mufti-étage selon l'une quelconque des revendications 14 à 19, **caractérisé en ce que** ladite information de fiabilité (47) concernant l'information de conformation pour le niveau de qualité i est une information de fiabilité quantifiée en dur, ledit moyen de génération d'information de fiabilité (44) étant adapté pour générer ladite information de fiabilité quantifiée en dur en recodant ladite information de conformation à erreur corrigée pour le niveau de qualité i.

21. Décodeur multi-étage selon l'une quelconque des revendications 14 à 20, **caractérisé en ce que** ladite information de fiabilité (45) concernant lesdites trains de bits de niveau de cartographie est une information de fiabilité quantifiée en dur, ledit moyen de décodage étant adapté pour générer ladite information de fiabilité quantifiée en dur en recodant lesdits trains de bits de niveau de cartographie décodés.

22. Décodeur mufti-étage selon l'une quelconque des revendications 15 à 21, **caractérisé en ce que** chaque point d'hyperconstellation ($u_{i,k}$) représente un sous-groupe d'un jeu de points de signal, ledit jeu de points de signal (6, ..., 13) étant un jeu régulier de points de signal, les sous-groupes (14, 15, 16, 17) d'un niveau de qualité respectif i étant distribués de façon symétrique autour de zéro.

23. Décodeur multi-étage selon l'une quelconque des revendications 14 à 22, **caractérisé par** un moyen de décalage qui est adapté pour décaler, chaque fois qu'une étiquette de cartographie a été décodée, les points d'hyperconstellation d'un sous-groupe respectif correspondant d'une valeur de décalage ($\sigma_0$, $\sigma_1$, $\sigma_2$) de telle sorte que les point d'hyperconstellation desdits sous-groupes soient centrés au niveau de zéro.

24. Décodeur multi-étage selon l'une quelconque des revendications 14 à 23, **caractérisé en ce que** ledit schéma de modulation est un schéma de modulation par saut d'amplitude (ASK) ou par amplitude en quadrature (QAM) et de façon davantage particulière, un schéma 8-ASK, 16-ASK, 64-QAM ou 256-QAM.

25. Signal de diffusion qui est modulé conformément à un schéma de modulation hiérarchique, ledit signal de diffusion comprenant des trains de bits pour l niveaux de cartographie qui correspondent à $L \geq 2$ niveaux de qualité différents, chaque niveau de qualité i étant représenté par $l_i$ étiquettes de cartographie correspondantes et ainsi, en établissant les $l_i$ étiquettes de cartographie correspondant audit niveau de qualité i, l'un de $2^{l_i}$ points d'hyperconstellation ($u_{i,k}$) dudit niveau de qualité i est sélectionné, chaque point d'hyperconstellation ($u_{i,k}$) représentant un sous-groupe d'un jeu de points de signal,

    **caractérisé en ce que** :

au moins un train de bits pour des niveaux de cartographie du niveau de qualité i comprend des bits de conformation, les distributions de probabilités des $2^{l_i}$ points d'hyperconstellation ($u_{i,k}$) à l'intérieur d'au moins l'un des niveaux de qualité i étant conformées de façon individuelle pour ledit au moins un des niveaux de qualité, de telle sorte que les $l_i$ points d'hyperconstellation ($u_{i,k}$) d'un niveau de qualité i surviennent moyennant des probabilités distribuées de façon non égale ($p_{U_i}(u_{i,k})$).

26. Signal de diffusion selon la revendication 25, **caractérisé en ce que** ledit signal de diffusion comprend des trains de bits codés séparément desdits l niveaux de cartographie.

27. Signal de diffusion selon la revendication 25 ou 26, **caractérisé en ce que** les distributions de probabilités des $2^{l_i}$ points d'hyperconstellation à l'intérieur d'au moins l'un des niveaux de qualité sont conformées conformément à une information de conformation qui est utilisée pendant l'opération de conformation et ainsi, ledit signal de diffusion comprend à la fois ladite information de conformation et lesdits trains de bits codés.

28. Signal de diffusion selon l'une quelconque des revendications 25 à 27, **caractérisé en ce que** ledit signal de diffusion comprend une redondance de codage d'information de conformation qui est générée en codant ladite information de conformation.

29. Signal de diffusion selon l'une quelconque des revendications 25 à 28, **caractérisé en ce que** ladite distribution de probabilités à l'intérieur d'au moins un niveau de qualité i est une distribution gaussienne discrète.

30. Signal de diffusion selon l'une quelconque des revendications 25 à 29, **caractérisé en ce que** ledit jeu de points de signal est un jeu espacé de façon non uniforme de points de signal.

31. Signal de diffusion selon l'une quelconque des revendications 25 à 30, **caractérisé en ce que** ledit jeu de points de signal est un jeu régulier de points de signal, les sous-groupes d'un niveau de qualité respectif i étant distribués de façon symétrique autour de zéro.

32. Signal de diffusion selon l'une quelconque des revendications 25 à 31, **caractérisé en ce que** ledit schéma de modulation est un schéma de modulation par saut d'amplitude (ASK) ou par amplitude en quadrature (QAM) et de façon davantage particulière, un schéma 8-ASK, 16-ASK, 64-QAM ou 256-QAM.

33. Procédé pour générer un signal de diffusion conformément à un schéma de modulation hiérarchique, le procédé comprenant les étapes de :

   partitionnement de trains de bits de signal de source ($q_i$) de L 2 niveaux de qualité différents selon des trains de bits ($x_0$, ... , $x_{l-i}$) pour l niveaux de cartographie, chaque niveau de qualité i étant représenté par $l_i$ étiquettes de cartographie correspondantes ;
   établissement des $l_i$ étiquettes de cartographie correspondant audit niveau de qualité i, d'où ainsi la sélection de l'un de $2^{l_i}$ points d'hyperconstellation ($u_{i,k}$) dudit niveau de qualité i, chaque point d'hyperconstellation ($u_{i,k}$) représentant un sous-groupe d'un jeu de points de signal,

   **caractérisé par** :

   l'assignation, de façon individuelle pour au moins un niveau de qualité, de probabilités distribuées de façon inégale ($p_{U_i}(u_{i,k})$) aux $2^{l_i}$ points d'hyperconstellation ($u_{i,k}$) d'un niveau de qualité i en additionnant des bits de conformation à au moins un train de bits pour des niveaux de cartographie dudit niveau de qualité i.

34. Procédé selon la revendication 33, **caractérisé en ce que** des trains de bits desdits 1 niveaux de cartographie sont codés de façon séparée

35. Procédé selon la revendication 33 ou 34, **caractérisé en ce que** ladite opération de conformation est réalisée au moyen d'unités de conformation conformément à une information de conformation qui est entrée, en association avec les trains de bits qui doivent être conformés, sur lesdites unités de conformation.

36. Procédé selon l'une quelconque des revendications 33 à 35, **caractérisé par** la génération d'une redondance de codage d'information de conformation pour au moins l'un desdits niveaux de qualité et par la transmission de ladite redondance de codage d'information de conformation en association avec ladite information de conformation afin de protéger ladite information de conformation.

37. Procédé selon la revendication 36, **caractérisé par** le choix de l'étendue d'une redondance de codage d'information de conformation pour le niveau de qualité i conformément au rapport signal sur bruit du niveau de qualité i +1.

**38.** Procédé selon l'une quelconque des revendications 33 à 37, **caractérisé en ce que** ladite distribution de probabilités à l'intérieur d'au moins un niveau de qualité i est une distribution gaussienne discrète.

Fig. 1

Fig. 2

Fig. 3A

Fig. 3B

Fig. 4

Fig. 5

EP 1 324 558 B1

Fig. 6

Fig. 7

Fig. 8

31

Fig. 9

Fig. 10

switch on receiver

| decode data QL0 [n-1] | decode data QL1 [n-1] ↑ decode shaping QL0 [n-1] ↑ decode data QL0 [n] | decode data QL1 [n] ↑ decode shaping QL0 [n] ↑ decode data QL0 [n+1] | - - - |

| data QL1 [n-1] | data QL1 [n] | data QL1 [n+1] | t |

| cod. red. shap. [n-2] | data QL0 [n-1] | cod. red. shap. [n-1] | data QL0 [n] | cod. red. shap. [n] | data QL0 [n+1] |

| transmission block [n-1] | transmission block [n] | transmission block [n+1] |

Fig. 11

Fig. 12